(19)

**Europäisches Patentamt**

**European Patent Office**

**Office européen des brevets**

(11) **EP 4 626 078 A1**

(12) **EUROPEAN PATENT APPLICATION**
published in accordance with Art. 153(4) EPC

(43) Date of publication:
01.10.2025 Bulletin 2025/40

(21) Application number: 23899857.9

(22) Date of filing: 29.11.2023

(51) International Patent Classification (IPC):
*H04W 36/08* (2009.01)

(52) Cooperative Patent Classification (CPC):
H04W 36/00; H04W 36/08; H04W 36/16;
H04W 36/30

(86) International application number:
PCT/CN2023/135147

(87) International publication number:
WO 2024/120278 (13.06.2024 Gazette 2024/24)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 06.12.2022 CN 202211560779

(71) Applicant: Huawei Technologies Co., Ltd.
Shenzhen, Guangdong 518129 (CN)

(72) Inventors:
• SENG, Shuming
Shenzhen, Guangdong 518129 (CN)
• LI, Chenwan
Shenzhen, Guangdong 518129 (CN)
• CHEN, Lei
Shenzhen, Guangdong 518129 (CN)

(74) Representative: Maiwald GmbH
Engineering
Elisenhof
Elisenstrasse 3
80335 München (DE)

(54) **CELL RESELECTION METHOD AND APPARATUS, SYSTEM, AND STORAGE MEDIUM**

(57) This application discloses a cell reselection method and apparatus, a system, and a storage medium. A terminal receives measurement indication information from a serving cell, performs neighboring cell measurement based on the measurement indication information, and reselects to a target cell when determining, based on a neighboring cell measurement result, that a reselection criterion is satisfied. The measurement indication information is different from that in an existing cell reselection solution, where the two pieces of information carry different content and are sent in different modes. In the existing cell reselection solution, a synchronization terminal can determine a reception occasion of a neighboring cell signal based on frame number indication information, where the occasion is a time position relative to a frame number, and needs to be frame aligned between the terminal and a base station. However, this is not applicable to an asynchronous tag, because the asynchronous tag cannot implement precise frame number alignment with a cell. Therefore, cell reselection of this type of terminals can be accurately implemented by using the solutions in this application.

FIG. 5

EP 4 626 078 A1

**Description**

This application claims priority to Chinese Patent Application No. 202211560779.3, filed with the China National Intellectual Property Administration on December 6, 2022 and entitled "CELL RESELECTION METHOD AND APPARATUS, SYSTEM, AND STORAGE MEDIUM", which is incorporated herein by reference in its entirety.

**TECHNICAL FIELD**

This application relates to the field of communication technologies, and in particular, to a cell reselection method and apparatus, a system, and a storage medium.

**BACKGROUND**

A terminal with low power consumption, for example, a tag, does not support a cell reselection technology in existing new radio (new radio, NR), does not support a complex design, and does not support complex measurement. For such a terminal, there is no corresponding solution for how to perform cell reselection when signal quality of a serving cell in which the terminal is located is poor.

**SUMMARY**

This application provides a cell reselection method and apparatus, a system, and a storage medium, so that a terminal that does not support a complex design or complex measurement accurately performs cell reselection.

According to a first aspect, a cell reselection method is provided. The method includes: A terminal receives an indication signal from a serving cell, where the indication signal includes measurement indication information, and the measurement indication information includes at least one of the following information: frequency information of at least one neighboring cell, a cell identifier of the at least one neighboring cell, a measurement time period, a measurement time offset, and a measurement periodicity, where the measurement time period indicates duration of measurement or monitoring on the at least one neighboring cell in the measurement periodicity, the measurement time offset indicates a time offset between receiving a target signal and starting neighboring cell measurement, and the measurement time offset is greater than or equal to 0; the terminal performs measurement on the at least one neighboring cell based on the measurement indication information, to obtain a measurement result of the at least one neighboring cell separately; and the terminal reselects to a target cell when determining, based on the measurement result of the at least one neighboring cell, that a reselection criterion is satisfied, where the target cell is one of the at least one neighboring cell.

In this aspect, the terminal receives the measurement indication information from the serving cell, performs neighboring cell measurement based on the measurement indication information, and reselects to the target cell when determining, based on a neighboring cell measurement result, that the reselection criterion is satisfied. The measurement indication information is different from that in an existing cell reselection solution, where the two pieces of information carry different content and are sent in different modes. In the existing cell reselection solution, a synchronization terminal can determine a reception occasion of a neighboring cell signal based on frame number indication information, where the occasion is a time position relative to a frame number, and needs to be frame aligned between the terminal and a base station. However, this is not applicable to an asynchronous tag, because the asynchronous tag cannot implement precise frame number alignment with a cell. Therefore, cell reselection of this type of terminals can be accurately implemented by using the solutions in this application.

In a possible implementation, the indication signal is at least one of the following: a beacon, a system message, a paging message, a selection message, and a synchronization signal.

In another possible implementation, the method further includes: The terminal obtains signal quality of the serving cell based on a target signal of the serving cell, where the target signal is at least one of the following: a beacon, a reference signal, a system message, a paging message, a selection message, a synchronization signal, and downlink data; and the terminal determines, based on the signal quality of the serving cell, whether to start measurement on the at least one neighboring cell. In this implementation, neighboring cell measurement is started only when the signal quality of the serving cell does not satisfy a requirement. This can avoid frequent starting of neighboring cell measurement, which causes high power consumption of the terminal.

In still another possible implementation, that the terminal determines, based on the signal quality of the serving cell, whether to start measurement on the at least one neighboring cell includes: If determining that the signal quality of the serving cell is less than or equal to a first signal quality threshold, the terminal determines to start measurement on the at least one neighboring cell, where the at least one neighboring cell includes at least one type of the following cells: an intra-frequency cell of the serving cell or an inter-frequency cell of the serving cell.

In still another possible implementation, the terminal belongs to a first terminal group, the first terminal group includes at least one terminal, and the first terminal group corresponds to a first measurement time period, and/or the first terminal group corresponds to a first measurement time offset. In this implementation, different terminals may correspond to different measurement time offsets and/or different measurement time periods. For a plurality of terminals, different terminals may be grouped into different terminal groups, and different measurement time offsets and/or different measurement time periods are allocated to different terminal groups. Therefore, a base station can perform accurate and flexible configuration on different terminal groups separately, so that a corresponding terminal can accurately perform neighboring cell measurement.

In still another possible implementation, the at least one neighboring cell and the serving cell are intra-frequency cells, and the measurement indication information further includes a measurement sequence of the at least one neighboring cell. That the terminal performs measurement on the at least one neighboring cell based on the measurement indication information to obtain the measurement result of the at least one neighboring cell separately includes: performing, in the measurement time period, measurement on the at least one neighboring cell in sequence based on the measurement sequence of the at least one neighboring cell, to obtain the measurement result of the at least one neighboring cell separately. Compared with the foregoing implementation, in this implementation, configuration information of the base station is less, and signaling overheads are reduced. For example, this implementation is applicable to a case in which reference signals sent by different neighboring cells can be controlled within a short time interval (for example, there are a small quantity of neighboring cells, or distances between neighboring cells and the terminal are almost the same).

In still another possible implementation, the at least one neighboring cell and the serving cell are inter-frequency cells, the at least one neighboring cell corresponds to at least one inter-frequency, the measurement indication information further includes a measurement sequence of the at least one neighboring cell, and the at least one neighboring cell corresponds to at least one measurement time period. That the terminal performs measurement on the at least one neighboring cell based on the measurement indication information to obtain the measurement result of the at least one neighboring cell separately includes: The terminal hands over to a frequency corresponding to the at least one neighboring cell in the at least one measurement time period; and the terminal performs, on the frequency corresponding to the at least one neighboring cell, measurement on the at least one neighboring cell in sequence based on the measurement sequence of the at least one neighboring cell, to obtain the measurement result of the at least one neighboring cell separately. In this implementation, when distances between different neighboring cells and the terminal differ greatly, or there are a large quantity of neighboring cells, it is difficult to control reference signals of different neighboring cells to all arrive in a short time interval. Therefore, a plurality of measurement time periods are set to make configuration of neighboring cell signal measurement more flexible.

In still another possible implementation, the method further includes: When determining, based on the measurement result of the at least one neighboring cell, that the reselection criterion is not satisfied, the terminal adjusts at least one of the following parameters: the measurement periodicity and the first signal quality threshold.

In this implementation, when signal quality of the neighboring cell is much lower than the signal quality of the serving cell, neighboring cell measurement is no longer performed within a specific period of time, and the terminal may adjust a measurement periodicity of the serving cell. In this way, when the signal quality of the serving cell is good, the measurement periodicity of the tag for the serving cell is increased, and unnecessary measurement overheads of the tag are reduced.

Alternatively, if the signal quality of the serving cell is excessively low (a minimum service requirement cannot be satisfied), the measurement periodicity of the serving cell may be shortened, to quickly find a neighboring cell with good signal quality.

Alternatively, if the signal quality of the neighboring cell is much lower than the signal quality of the serving cell, neighboring cell measurement may not be performed within a specific period of time, to reduce unnecessary measurement overheads. Each time the tag performs measurement, some high overheads are caused. The terminal may add an offset to the first signal quality threshold, to relax a neighboring cell selection criterion; or end a reselection procedure, and reselect a cell. In this way, a case can be prevented in which a reselection criterion is set to high, but current cell service quality cannot support normal services, and therefore a cell needs to be reselected.

Alternatively, if the signal quality of the serving cell is excessively low (a minimum service requirement cannot be satisfied), the first signal quality threshold is reduced, to quickly find a neighboring cell with a good signal, or trigger cell reselection.

In still another possible implementation, the method further includes: The terminal determines at least one of the following: the measurement result of the at least one neighboring cell, the priority of the serving cell, and the priority of the at least one neighboring cell; and the terminal determines a reselection value of each neighboring cell in the at least one neighboring cell, where the reselection value of each neighboring cell is a sum of a measurement result of the neighboring cell and a threshold and/or a priority parameter, and the threshold is greater than or equal to 0; and when the reselection value of the neighboring cell is greater than the signal quality of the serving cell, the terminal determines that the neighboring cell satisfies the reselection criterion; or when the reselection value of the neighboring cell is less than or equal to the signal quality of the serving cell, the terminal determines that the neighboring cell does not satisfy the reselection criterion.

In this implementation, the threshold and/or the priority parameter are/is added to the measurement result of the neighboring cell, so that the terminal can preferentially reselect to a frequency with a high priority.

According to a second aspect, a cell reselection method is provided. The method includes: A first network device obtains measurement indication information, where the measurement indication information includes at least one of the following information: frequency information of at least one neighboring cell, a cell identifier of the at least one neighboring cell, a measurement time period, a measurement time offset, and a measurement periodicity, where the measurement time period indicates duration of measurement or monitoring on the at least one neighboring cell in the measurement periodicity, the measurement time offset indicates a time offset between receiving a target signal and starting neighboring cell measurement, and the measurement time offset is greater than or equal to 0; and the first network device sends an indication signal, where the indication signal includes the measurement indication information.

In a possible implementation, the indication signal further includes at least one of the following signals: a beacon, a system message, a paging message, a selection message, and a synchronization signal.

In another possible implementation, that the first network device obtains the measurement indication information includes at least one of the following: The first network device obtains the measurement indication information configured by an operation, administration and maintenance OAM; or the first network device receives the measurement indication information from a second network device serving a neighboring cell.

According to a third aspect, a cell reselection method is provided. The method includes: A terminal obtains a first quantity, where the first quantity is a quantity of target signals continuously and successfully received from any one of at least one neighboring cell in a first time period, or the first quantity is a quantity of synchronization indications continuously received in the first time period; and when the first quantity is greater than or equal to a first quantity threshold, the terminal determines that signal quality of any neighboring cell satisfies a reselection criterion.

In a possible implementation, the method further includes: The terminal obtains a second quantity, where the second quantity is a quantity of target signals continuously and successfully received from a serving cell in a second time period, or the second quantity is a quantity of asynchronous indications continuously received in the second time period; and the terminal triggers measurement on the at least one neighboring cell when the second quantity is less than or equal to a second quantity threshold.

In this aspect, whether a neighboring cell satisfies the reselection criterion is determined based on a quantity of times of continuously and successfully receiving a target signal of the neighboring cell. This is simple and convenient to implement, and reduces measurement overheads of the terminal.

In another possible implementation, the target signal is at least one of the following: a beacon, a reference signal, a system message, a paging message, a selection message, a synchronization signal, and downlink data.

In still another possible implementation, the method further includes: The terminal adjusts a reselection parameter when determining that the at least one neighboring cell does not satisfy the reselection criterion, where the reselection parameter includes at least one of the following: the first quantity threshold, the second quantity threshold, the first time period, and the second time period.

According to a fourth aspect, a communication apparatus is provided, to implement the communication method according to the first aspect. For example, the communication apparatus may be a chip or a terminal. The foregoing method may be implemented by software, hardware, or hardware executing corresponding software.

In a possible implementation, the communication apparatus includes a transceiver unit and a processing unit. The transceiver unit is configured to receive an indication signal from a serving cell, where the indication signal includes measurement indication information, and the measurement indication information includes at least one of the following information: frequency information of at least one neighboring cell, a cell identifier of the at least one neighboring cell, a measurement time period, a measurement time offset, and a measurement periodicity, where the measurement time period indicates duration of measurement or monitoring on the at least one neighboring cell in the measurement periodicity, the measurement time offset indicates a time offset between receiving a target signal and starting neighboring cell measurement, and the measurement time offset is greater than or equal to 0. The processing unit is configured to perform measurement on the at least one neighboring cell based on the measurement indication information, to obtain a measurement result of the at least one neighboring cell separately. The processing unit is further configured to reselect to a target cell when determining, based on the measurement result of the at least one neighboring cell, that a reselection criterion is satisfied, where the target cell is one of the at least one neighboring cell.

Optionally, the indication signal is at least one of the following: a beacon, a system message, a paging message, a selection message, and a synchronization signal.

Optionally, the processing unit is further configured to obtain signal quality of the serving cell based on a target signal of the serving cell, where the target signal is at least one of the following: a beacon, a reference signal, a system message, a paging message, a selection message, a synchronization signal, and downlink data. The processing unit is further configured to determine, based on the signal quality of the serving cell, whether to start measurement on the at least one neighboring cell.

Optionally, the processing unit is further configured to: if determining that the signal quality of the serving cell is less than or equal to a first signal quality threshold, determine to start measurement on the at least one neighboring cell, where the at least one neighboring cell includes at least one type of the following cells: an intra-frequency cell of the serving cell or an inter-frequency cell of the serving cell.

Optionally, the terminal belongs to a first terminal group, the first terminal group includes at least one terminal, and the first terminal group corresponds to a first measurement time period, and/or the first terminal group corresponds to a first measurement time offset.

Optionally, the at least one neighboring cell and the serving cell are intra-frequency cells, and the measurement indication information further includes a measurement sequence of the at least one neighboring cell. The processing unit is further configured to perform, in the measurement time period, measurement on the at least one neighboring cell in sequence based on the measurement sequence of the at least one neighboring cell, to obtain the measurement result of the at least one neighboring cell separately.

Optionally, the at least one neighboring cell and the serving cell are inter-frequency cells, the at least one neighboring cell corresponds to at least one inter-frequency, the measurement indication information further includes a measurement sequence of the at least one neighboring cell, and the at least one neighboring cell corresponds to at least one measurement time period. The processing unit is further configured to hand over to a frequency corresponding to the at least one neighboring cell in the at least one measurement time period. The processing unit is further configured to perform, on the frequency corresponding to the at least one neighboring cell, measurement on the at least one neighboring cell in sequence based on the measurement sequence of the at least one neighboring cell, to obtain the measurement result of the at least one neighboring cell separately.

Optionally, the processing unit is further configured to: when determining, based on the measurement result of the at least one neighboring cell, that the reselection criterion is not satisfied, adjust at least one of the following parameters: the measurement periodicity and the first signal quality threshold.

Optionally, the processing unit is further configured to determine at least one of the following: the measurement result of the at least one neighboring cell, a priority of the serving cell, and a priority of the at least one neighboring cell. The processing unit is further configured to determine a reselection value of each neighboring cell in the at least one neighboring cell based on at least one of the following: the measurement result of the at least one neighboring cell, the priority of the serving cell, and the priority of the at least one neighboring cell, where the reselection value of each neighboring cell is a sum of a measurement result of the neighboring cell and a threshold and/or a priority parameter, and the threshold is greater than or equal to 0. The processing unit is further configured to: when the reselection value of the neighboring cell is greater than the signal quality of the serving cell, determine that the neighboring cell satisfies the reselection criterion; or when the reselection value of the neighboring cell is less than or equal to the signal quality of the serving cell, determine that the neighboring cell does not satisfy the reselection criterion.

According to a fifth aspect, a communication apparatus is provided, to implement the communication method according to the second aspect. For example, the communication apparatus may be a chip or a first network device. The foregoing method may be implemented by software, hardware, or hardware executing corresponding software.

In a possible implementation, the communication apparatus includes a transceiver unit and a processing unit. The processing unit is configured to obtain measurement indication information, where the measurement indication information includes at least one of the following information: frequency information of at least one neighboring cell, a cell identifier of the at least one neighboring cell, a measurement time period, a measurement time offset, and a measurement periodicity, where the measurement time period indicates duration of measurement or monitoring on the at least one neighboring cell in the measurement periodicity, the measurement time offset indicates a time offset between receiving a target signal and starting neighboring cell measurement, and the measurement time offset is greater than or equal to 0. The transceiver unit is configured to send an indication signal, where the indication signal includes the measurement indication information.

Optionally, the indication signal further includes at least one of the following signals: a beacon, a system message, a paging message, a selection message, and a synchronization signal.

Optionally, the processing unit is configured to obtain the measurement indication information configured by an operation, administration and maintenance OAM; or the transceiver unit is configured to receive the measurement indication information from a second network device serving a neighboring cell.

According to a sixth aspect, a communication apparatus is provided, to implement the communication method according to the third aspect. For example, the communication apparatus may be a chip or a terminal. The foregoing method may be implemented by software, hardware, or hardware executing corresponding software.

In a possible implementation, the communication apparatus includes a processing unit, and may further include a transceiver unit. The processing unit is configured to obtain a first quantity, where the first quantity is a quantity of target signals continuously and successfully received from any one of at least one neighboring cell in a first time period, or the first quantity is a quantity of synchronization indications continuously received in the first time period. The processing unit is configured to: when the first quantity is greater than or equal to a first quantity threshold, determine that signal quality of any neighboring cell satisfies a reselection criterion.

Optionally, the processing unit is further configured to obtain a second quantity, where the second quantity is a quantity of target signals continuously and successfully received from a serving cell in a second time period, or the second quantity is a quantity of asynchronous indications continuously received in the second time period. The processing unit is further configured to trigger measurement on the at least one neighboring cell when the second quantity is less than or equal to a second quantity threshold.

Optionally, the target signal is at least one of the following: a beacon, a reference signal, a system message, a paging message, a selection message, a synchronization signal, and downlink data.

Optionally, the processing unit is further configured to adjust a reselection parameter when determining that the at least one neighboring cell does not satisfy the reselection criterion, where the reselection parameter includes at least one of the following: the first quantity threshold, the second quantity threshold, the first time period, and the second time period.

With reference to any one of the fourth aspect to the sixth aspect, in still another possible implementation, the communication apparatus in any one of the fourth aspect to the sixth aspect includes a processor coupled to a memory, and the processor is configured to support the apparatus in performing a corresponding function in the foregoing communication methods. The memory is configured to couple to the processor, and stores a program (instructions) and/or data necessary for the apparatus. Optionally, the communication apparatus may further include a communication interface, configured to support communication between the apparatus and another network element. Optionally, the memory may be located inside the communication apparatus, or may be located outside the communication apparatus. Optionally, the memory may be integrated with the processor.

With reference to any one of the fourth aspect to the sixth aspect, in still another possible implementation, the communication apparatus in any one of the fourth aspect to the sixth aspect includes a processor and a transceiver apparatus, the processor is coupled to the transceiver apparatus, the processor is configured to execute a computer program or instructions, to control the transceiver apparatus to receive and send information; and when the processor executes the computer program or the instructions, the processor is further configured to implement the foregoing methods through a logic circuit or by executing code instructions. The transceiver apparatus may be a transceiver, a transceiver circuit, or an input/output interface, and is configured to: receive a signal from an apparatus other than the communication apparatus and transmit the signal to the processor, or send a signal from the processor to an apparatus other than the communication apparatus. When the communication apparatus is the chip, the transceiver apparatus is a transceiver circuit or an input/output interface.

When the communication apparatus in any one of the fourth aspect to the sixth aspect is a chip or a chip module, a sending unit may be an output unit, for example, an output circuit or a communication interface, and a receiving unit may be an input unit, for example, an input circuit or a communication interface. When the communication apparatus is a terminal or an access network device, a sending unit may be a transmitter or a transmitter machine, and a receiving unit may be a receiver or a receiver machine.

According to a seventh aspect, a communication system is provided. The communication system includes the communication apparatuses according to the fourth aspect and the fifth aspect.

According to an eighth aspect, a communication system is provided. The communication system includes the communication apparatus according to the sixth aspect.

According to a ninth aspect, a computer-readable storage medium is provided. The computer-readable storage medium stores a computer program or instructions; and when a computer executes the computer program or the instructions, the methods in the foregoing aspects are implemented.

According to a tenth aspect, a computer program product including instructions is provided. When the instructions are run on a communication apparatus, the communication apparatus is enabled to perform the methods in the foregoing aspects.

## BRIEF DESCRIPTION OF DRAWINGS

FIG. 1 is a diagram of an architecture of a communication system 1000 to which an embodiment of this application is applied;

FIG. 2a is a diagram of a structure of an RFID system according to an embodiment of this application;

FIG. 2b is another diagram of a structure of an RFID system according to an embodiment of this application;

FIG. 2c is still another diagram of a structure of an RFID system according to an embodiment of this application;

FIG. 3a is a diagram of a structure of an RFID system with a separated architecture according to an embodiment of this application;

FIG. 3b is another diagram of a structure of an RFID system with a separated architecture according to an embodiment of this application;

FIG. 3c is still another diagram of a structure of an RFID system with a separated architecture according to an embodiment of this application;

FIG. 3d is still another diagram of a structure of an RFID system with a separated architecture according to an embodiment of this application;

FIG. 4 is a diagram of an RFID working procedure according to an embodiment of this application;

FIG. 5 is a schematic flowchart of a cell reselection method according to an embodiment of this application;

FIG. 6a is a diagram of an example of neighboring cell signal measurement according to an embodiment of this application;

FIG. 6b is another diagram of an example of neighboring cell signal measurement according to an embodiment of this application;

FIG. 7a is a diagram of signal measurement on frequencies of a plurality of neighboring cells according to an embodiment of this application;

FIG. 7b is another diagram of signal measurement on frequencies of a plurality of neighboring cells according to an embodiment of this application;

FIG. 8 is another schematic flowchart of a cell reselection method according to an embodiment of this application;

FIG. 9 is still another schematic flowchart of a cell reselection method according to an embodiment of this application;

FIG. 10 is a diagram of an example of continuous reception according to an embodiment of this application;

FIG. 11 is a diagram of an example of receiving a beacon by a tag according to an embodiment of this application;

FIG. 12 is a diagram of a structure of a communication apparatus according to an embodiment of this application; and

FIG. 13 is another diagram of a structure of a communication apparatus according to an embodiment of this application.

## DESCRIPTION OF EMBODIMENTS

The following describes embodiments of this application with reference to the accompanying drawings in embodiments of this application.

Embodiments of this application may be applied to various communication systems, for example, a long term evolution (long term evolution, LTE) system, LTE time division duplex (time division duplex, TDD), a 5th generation (5th generation, 5G) communication system, and a future 6th generation (6th generation, 6G) communication system.

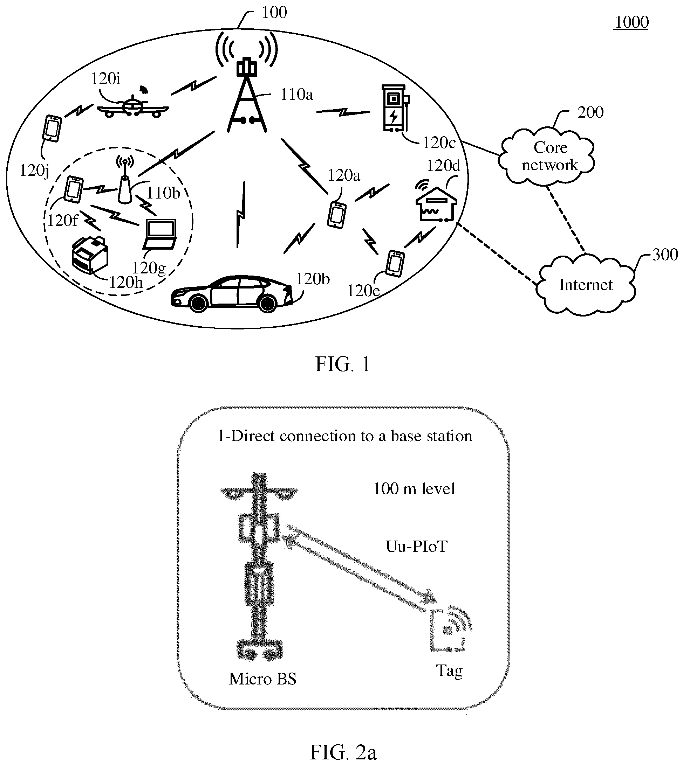

FIG. 1 is a diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. A wired or wireless manner may be used for connection between terminals and between radio access network devices. FIG. 1 is only a diagram. The communication system may further include other network devices, for example, may further include a wireless relay device and a wireless backhaul device, which are not shown in FIG. 1.

The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or unit that completes some functions of the base station, for example, may be a central unit (central unit, CU), or may be a distributed unit (distributed unit, DU). The radio access network device may be a macro base station (for example, 110a in FIG. 1), may be a micro base station or an indoor base station (for example, 110b in FIG. 1), or may be a relay node or a donor node. A specific technology and a specific device form that are used by the radio access network device are not limited in embodiments of this application. For ease of description, the following provides descriptions by using an example in which the radio access network device is a base station.

The terminal may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, autonomous driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal are not limited in embodiments of this application.

The base station and the terminal may be fixed or movable. The base station and the terminal may be deployed on the land, including an indoor device, an outdoor device, a handheld device, or a vehicle-mounted device; may be deployed on the water; or may be deployed on an airplane, a balloon, and an artificial satellite in the air. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 through 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b in FIG. 1 may be referred to as a communication apparatus having a base station function, and 120a to 120j in FIG. 1 may be referred to as a communication apparatus having a terminal function.

Communication between the base station and the terminal, between base stations, or between terminals may be performed over a licensed spectrum, may be performed over an unlicensed spectrum, or may be performed over both the licensed spectrum and the unlicensed spectrum. Communication may be performed over a spectrum below 6 gigahertz (gigahertz, GHz), may be performed over a spectrum above 6 GHz, or may be performed over both the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. A function of the terminal may be performed by a module (for example, a chip or a modem) in the terminal, or may be performed by an apparatus including the function of the terminal.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal is further interfered by a signal from a neighboring cell.

In embodiments of this application, a time domain symbol may be an orthogonal frequency division multiplexing (orthogonal frequency division multiplexing, OFDM) symbol, or may be a discrete Fourier transform-spread-OFDM (Discrete Fourier Transform-spread-OFDM, DFT-s-OFDM) symbol. Unless otherwise specified, all symbols in embodiments of this application are time domain symbols.

It may be understood that, in embodiments of this application, a physical downlink shared channel (physical downlink shared channel, PDSCH), a physical downlink control channel (physical downlink control channel, PDCCH), and a physical uplink shared channel (physical uplink shared channel, PUSCH) are merely examples of a downlink data channel, a downlink control channel, and an uplink data channel respectively. In different systems and different scenarios, a data channel and a control channel may have different names. This is not limited in embodiments of this application.

Radio frequency identification (radio-frequency identification, RFID):

In the following descriptions, interaction between a terminal and a base station in IoT is used as an example to describe the solutions of embodiments.

This application particularly relates to a passive internet of things (passive IoT, PIoT) or an ambient IoT. The passive internet of things is based on cellular network communication infrastructure and includes a reader (interrogator) and a passive/semi-passive/active tag (tag). Typical application scenarios include logistics, warehousing, industrial manufacturing, identification, and sensing.

A typical technology related to identification is an RFID technology. The RFID technology may be used to identify a target. An RFID system usually includes a reader and a tag. The reader may exchange information with the tag, to manage the tag.

A main application scenario of RFID is identification, and RFID may be further for data reading and writing.

In an RFID scenario, the terminal may refer to a tag in the RFID system.

An RFID tag features low power consumption. Power consumption of different types of tags is as follows:

passive tag: about 1 μW power consumption;
semi-passive tag: about 100 μW power consumption; and
active tag: about 50 mW power consumption.

The tag has the following features:

(1) Existing RFID does not support measurement or cell reselection.
(2) The passive IoT tag is low in costs and does not support a complex design.
(3) The tag is designed simply. An application layer and air interface signaling are designed together.
(4) The tag supports microwatt-level or 100 microwatt-level power consumption, but does not support a complex design or complex measurement.
(5) In multi-tag communication, time division duplex is used, and a plurality of tags use a serializable read mode. Distinguishing between a frequency domain and a code domain is not supported, and parallel performance is poor.

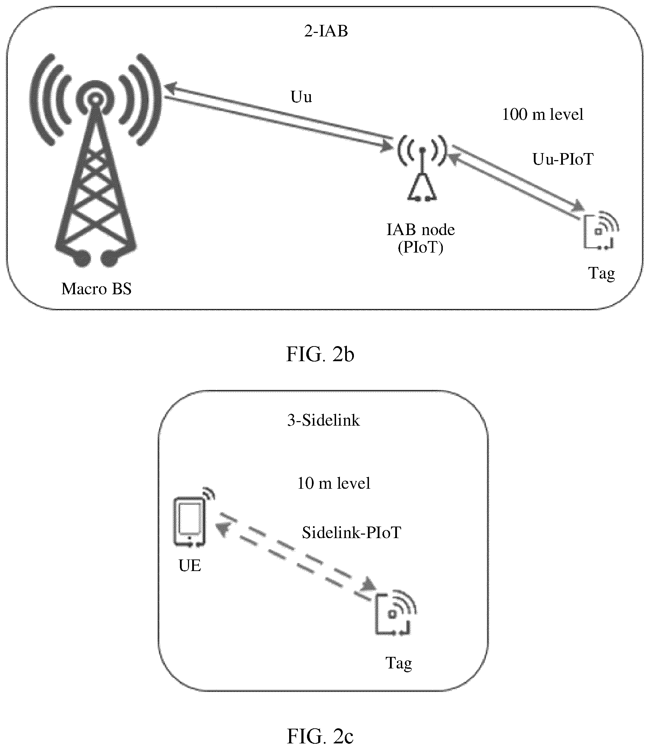

The tag may be located within a coverage area provided by the reader. FIG. 2a is a diagram of a structure of an RFID system according to an embodiment of this application. When the reader is a base station, the base station is connected to the tag through Uu, that is, air interface communication is implemented. For example, the base station may be a micro base station (Micro BS), and the reader may provide a 100m level (100m level) coverage area. FIG. 2b is another diagram of a structure of an RFID system according to an embodiment of this application. The reader may be connected to an integrated access and backhaul (integrated access and backhaul, IAB) node (Node) through Uu. The IAB node is connected to a base station through Uu, and the IAB node may provide a 100 m level coverage area. For example, the base station may be a macro base station (Macro BS). FIG. 2c is still another diagram of a structure of an RFID system according to an embodiment of this application. A tag is connected to a terminal through a sidelink (sidelink), and the terminal may provide a 10m level (10m level) coverage area.

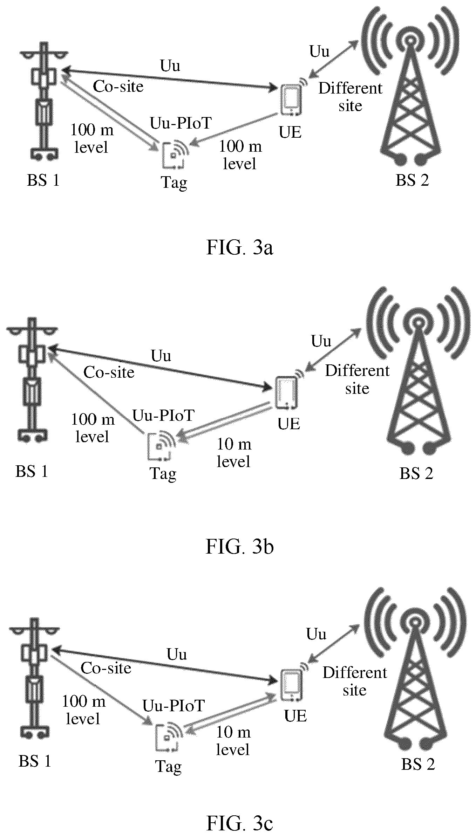

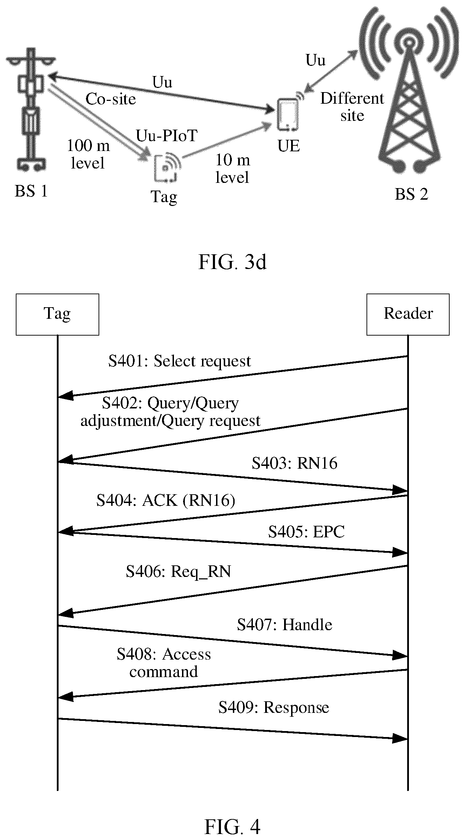

In addition, an embodiment of this application further provides an RFID system with a separated architecture (that is, uplink and downlink decoupling). FIG. 3a is a diagram of a structure of an RFID system with a separated architecture according to an embodiment of this application. A tag and a reader (for example, a BS 1) have only an uplink connection, and the tag and an excitation source (helper) (namely, UE) have only a downlink connection. The BS 1 provides a carrier (carrier wave). FIG. 3b is another diagram of a structure of an RFID system with a separated architecture according to an embodiment of this application. A tag and a reader (for example, a BS 1) have only an uplink connection, and the tag and an excitation source (namely, UE) have only a downlink connection. The UE provides a carrier. FIG. 3c is still another diagram of a structure of an RFID system with a separated architecture according to an embodiment of this application. A tag and an excitation source (for example, a BS 1) have only a downlink connection, and the tag and a reader (namely, UE) have only an uplink connection. The UE provides a carrier. FIG. 3d is still another diagram of a structure of an RFID system with a separated architecture according to an embodiment of this application. A tag and an excitation source (for example, a BS 1) have only a downlink connection, and the tag and a reader (namely, UE) have only an uplink connection. The BS 1 provides a carrier. In FIG. 3a to FIG. 3d, both the tag and the UE are located in a coverage area of the BS 1, and the UE may further communicate with a BS 2 through a Uu connection. The BS 2 is a base station different from the BS 1 (the BS 1 is a serving base station of the UE, and the BS 2 is a different base station). For example, the BS 1 is a micro base station, and the BS 2 is a macro base station.

FIG. 4 is a diagram of an RFID working procedure according to an embodiment of this application. For example, the procedure may be for performing inventory on a labeled item. The procedure may include the following steps.

S401: A reader sends a select request (Select) to a tag, where the select command allows the reader to select a specific tag group before inventory.

S402: The reader sends a query (Query)/query adjustment (QueryAdjust)/query request (QueryReq) to the tag. The Query contains a parameter Q measured in slots. When participating tags receive Query, the tags select a random value in a range $(0, 2^Q-1)$ and load the value to their slot counters. A tag that selects zero switches to a reply (reply) state and responds immediately. A tag that selects a non-zero value switches to an arbitrate (arbitrate) state and waits for the QueryAdjust or QueryRep command.

S403: If a slot counter generated by the tag is 0, the tag feeds back a 16-bit random number (RN16); otherwise, the tag does not feed back RN16.

S404: The reader sends an acknowledgement (acknowledgement, ACK) to the tag, where the acknowledgement includes same RN16.

S405: The tag compares RN16 fed back by the tag with RN16 sent by the reader in step S404; and if RN16 matches, feeds back an electronic product code (electronic product code, EPC); otherwise, does not feed back the electronic product code.

S406: The reader sends Req_RN (Request RN16, for requesting the tag to regenerate new RN16) to the tag, where Req_RN includes the foregoing RN16.

S407: The tag compares RN16 fed back by the tag with RN16 sent by the reader in step S406; and if Req_RN includes the RN16 that is matched by the tag and a 16-bit cyclic redundancy check (cyclic redundancy check, CRC-16, for checking integrity of a data packet), the tag needs to feed back and store new RN16 (denoted as a handle), and jumps to an open or secured state; or if RN16 does not match, the tag does not feed back new RN16.

S408: The reader sends an access command (command) to the tag, where the access command includes the handle.

S409: The tag verifies the handle; and if the verification succeeds, responds; otherwise, feeds back an error code.

RFID tags are easy to implement and do not support complex measurement. Therefore, the tag design solution needs to comply with a simplification principle. A workflow that is not based on complex measurement is extremely important for wide application of the passive IoT in cellular networks.

NR cell reselection:

In a cellular network, when a terminal in a non-connected state (including an idle (idle) state and an inactive (inactive) state) camps on a cell, and service quality of a current cell is poor, the terminal measures a parameter such as service quality of a neighboring cell (neighboring cell), and selects a more suitable cell for access according to a cell reselection mechanism.

In addition, the terminal keeps moving. If the terminal moves out of coverage of a current serving cell and enters a new cell, the terminal needs to perform cell reselection and camp on the new cell, to obtain a better service.

The network may control, by setting different priorities for frequencies, a quantity of users who can perform access on each frequency, to achieve load balancing. The terminal in the idle state or the inactive state starts radio resource management (radio resource management, RRM) measurement on a neighboring cell by determining priorities of a neighboring cell and the current cell and signal quality of the current cell, to camp on a cell with a higher priority or better signal quality.

Cell reselection may be classified into intra-frequency cell reselection and inter-frequency cell reselection. The intra-frequency cell reselection refers to cell reselection on a same frequency, and does not involve frequency priority processing. The inter-frequency cell reselection includes inter-frequency cell reselection and inter-RAT cell reselection. A best cell is determined based on frequency priority information. Cells participating in reselection may be from a neighboring cell list carried in a system information block (system information block, SIB) message, or may be cells detected in a reselection process.

For example, whether to start measurement on a non-serving frequency and neighboring cell measurement on a serving frequency (which may also be referred to as a neighboring cell measurement condition or a measurement start condition) may be evaluated based on a relationship between priorities corresponding to the serving frequency and the non-serving frequency and signal quality of a serving cell.

(1) If the non-serving frequency has a higher priority than the serving frequency, the non-serving frequency is measured unconditionally.

(2) If a network slice-based priority of the non-serving frequency is equal to a network slice-based priority of the serving frequency, the non-serving frequency has a lower priority than the serving frequency, or a neighboring cell is on the serving frequency:

(a) If the neighboring cell is on the serving frequency, $Srxlev > S_{IntraSearchP}$ and $Squal > S_{IntraSearchQ}$, measurement on the neighboring cell is not started; otherwise, measurement on the neighboring cell is started.

(b) If the neighboring cell is on the non-serving frequency, the non-serving frequency and the serving frequency are inter-frequencies or inter-radio access technology (radio access technology, RAT) frequencies, $Srxlev > S_{nonIntraSearchP}$, and $Squal > S_{nonIntraSearchQ}$, measurement on the non-serving frequency is not started; otherwise, measurement on the non-serving frequency is started.

Srxlev and Squal are signal quality of the serving cell obtained based on a measurement result of the serving cell, $S_{IntraSearchP}$ and $S_{IntraSearchQ}$ are thresholds configured by the network for starting intra-frequency neighboring cell measurement, and $S_{nonIntraSearchP}$ and $S_{nonIntraSearchQ}$ are thresholds configured by the network for starting inter-frequency neighboring cell measurement.

In other words, if the signal quality of the serving cell is good enough, measurement on the non-serving frequency does not need to be started; or if a signal value of the serving cell is lower than the foregoing threshold, measurement on the non-serving frequency is started.

$S_{IntraSearchP}$ and $S_{IntraSearchQ}$ may be carried in a SIB message.

Calculation and ranking based on an R criterion are performed on the signal quality of the serving cell and signal quality of the neighboring cell, to select a cell with best signal quality as the best cell. A calculation method based on the R criterion is shown in the following formula:

$$R_S = Q_{means,s} + Q_{hyst} + Q_{offsettemp} + Q_{offsetSCPTM}$$

$$R_n = Q_{means,n} + Q_{offset} + Q_{offsettemp} + Q_{offsetSCPTM}$$

$R_s$ is an R value of the serving cell, in units of dB. $R_n$ is an R value of the neighboring cell, in units of dB.

$Q_{means}$ is a reference signal received power measurement quantity used in cell reselections (RSRP measurement quantity used in cell reselections), in units of Bm.

$Q_{hyst}$ is a hysteresis value for ranking criteria (the hysteresis value for ranking criteria).

$Q_{offset}$: In a case of intra-frequency reselection, if $Q_{offset,n}$ is valid, a value of $Q_{offset}$ is $Q_{offset,n}$; otherwise, the value is 0.

In a case of inter-frequency reselection, if $Q_{offset,n}$ is valid, a value of $Q_{offset}$ is $Q_{offset,n} + Q_{offsetfrequency}$; otherwise, the value is $Q_{offsetfrequency}$.

$Q_{offsetSCPTM}$ is a temporary offset of an SC-PTM frequency.

The foregoing parameters involved in calculation based on the R criterion are sent to the terminal via a SIB message. The parameters TreselectionNR and $Q_{hyst}$ can be adjusted based on a moving speed (normal, medium, or high speed) of the terminal.

Calculation results of the R criterion are ranked. If the base station does not configure a parameter rangTo-BestCell, a cell whose R value is the largest is selected. If the base station configures the parameter rangToBestCell, the terminal selects a cell whose R value falls within a range of [Rbest-rangToBestCell, Rbest] and whose beam quality is higher than a threshold. Rbest is the best R value among measurement cells. If a plurality of cells satisfy this condition, a cell with the largest R value is selected as the best cell. Finally, whether the best cell is a suitable cell to camp on is determined based on a suitable cell criterion.

Inter-frequency cell reselection:

A terminal may obtain frequency priority information of inter-frequencies or inter-RATs via a SIB message or via a radio resource control (radio resource control, RRC) release message, or inherit the frequency priority information from another RAT when performing inter-radio access technology (inter-RAT) cell (re)selection. If the terminal obtains dedicated priority information, the terminal ignores public priority information carried in the SIB message. If a system does not provide priority information of a currently camped cell, a priority of the current cell is set to the lowest.

If a priority of a frequency is higher than that of a current frequency, the terminal needs to perform measurement. If a priority of a frequency is equal to or lower than that of the current frequency, a measurement criterion of the terminal is the same as that for starting intra-frequency measurement. Measurement content and a procedure are the same as those for intra-frequency cell reselection. During the measurement, MIB information of a neighboring cell is obtained to determine whether the neighboring cell allows camping.

Based on a relationship between network slice-based frequency priorities of a serving frequency and a non-serving frequency, there are the following corresponding reselection conditions:

(1) High-priority cell reselection: If the network slice-based frequency priority of the non-serving frequency is higher than that of the serving frequency, at least one cell on the non-serving frequency is a high-priority neighboring cell relative to the serving cell. In this case, provided that signal quality of the at least one cell on the non-serving frequency is good enough, a cell on the non-serving frequency may be reselected without considering signal quality of the serving cell. Examples are as follows:

(a) If threshServingLowQ exists, Squal>ThreshX,$_{HighQ}$ is always satisfied within Treselection. Reselection is started when Treselection expires; otherwise, reselection is not started.
(b) If threshServingLowQ does not exist, Srxlev>ThreshX,$_{HighP}$ is always satisfied within Treselection. Reselection is started when Treselection expires; otherwise, reselection is not started.

(2) Equal-priority cell reselection: If the network slice-based frequency priority of the non-serving frequency is equal to that of the serving frequency, at least one cell on the non-serving frequency is an equal-priority neighboring cell relative to the serving cell. In this case, signal quality of the at least one cell on the non-serving frequency is compared with signal quality of the serving cell. If the signal quality of the at least one cell on the non-serving frequency is higher than or equal to the signal quality of the serving cell, a cell on the non-serving frequency may be reselected.

For example, cell reselection may be performed based on a cell reselection criterion (an R criterion). The terminal calculates an R value (which may also be referred to as a cell signal quality level) of each cell based on reference signal received power (reference signal received power, RSRP) measurement values of the serving cell and a candidate neighboring cell (meeting a cell selection criterion, namely, an S criterion), and the like, and selects a suitable cell according to an R value ranking rule.

(3) Low-priority cell reselection: If the network slice-based frequency priority of the non-serving frequency is lower than that of the serving frequency, at least one cell on the non-serving frequency is a low-priority neighboring cell relative to the serving cell. In this case, when signal quality of the at least one cell on the non-serving frequency is good enough, and signal quality of the serving cell is poor enough, a cell on the non-serving frequency may be reselected. Examples are as follows:

(a) If threshServingLowQ exists, the following is always satisfied within Treselection: Squal for the serving cell is less than $\text{Thresh}_{\text{Serving,LowQ}}$ and Squal for the neighboring cell is greater than $\text{Thresh}_{\text{X,LowQ}}$. Reselection is started when Treselection expires; otherwise, reselection is not started.

(b) If threshServingLowQ does not exist, the following is always satisfied within Treselection: Srxlev is less than $\text{Thresh}_{\text{Serving,LowP}}$, and Srxlev for the neighboring cell is greater than $\text{Thresh}_{\text{X,LowP}}$. Reselection is started when Treselection expires; otherwise, reselection is not started.

$\text{Thresh}_{\text{X,HighQ}}$, $\text{Thresh}_{\text{X,HighP}}$, $\text{Thresh}_{\text{X,LowQ}}$, $\text{Thresh}_{\text{Serving,LowQ}}$, $\text{Thresh}_{\text{X,LowP}}$, and $\text{Thresh}_{\text{Serving,LowP}}$ are thresholds configured on a network side, and Treselection is a reselection evaluation timer configured on the network side.

Cells participating in reselection are ranked according to the R criterion. If a plurality of cells with a highest priority are suitable, a cell with best signal quality is selected for camping. Otherwise, a cell with a highest priority that satisfies a quality requirement is selected for camping.

However, for a tag, an existing NR cell reselection mechanism causes high overheads, affects tag access efficiency, and further affects a cell capacity.

In addition, an existing NR cell reselection procedure is mainly designed for a terminal having a specific processing capability, and has a high requirement on a processing capability of the terminal. This is not friendly for a terminal (tag) with a low complex design and a limited capability.

In addition, regarding the priority, in the existing reselection procedure, a priority of a neighboring cell is analyzed first, and then whether to perform inter-frequency measurement (unconditional inter-frequency measurement on a high-priority neighboring cell) is determined based on RSRP and reference signal received quality (reference signal receiving quality, RSRQ) of the serving cell. The inter-frequency measurement on the high-priority neighboring cell may be started when the RSRP of the serving cell is high, which may cause additional measurement overheads to the tag.

Therefore, in the cellular network, in the cell reselection solution for the tag, a procedure needs to be simplified and a measurement requirement needs to be reduced.

Inter-frequency measurement solution for a terminal:

An embodiment of this application further provides a synchronization signal block-based measurement timing configuration (SSB-based measurement timing configuration, SMTC) solution. The SMTC is a window configured by a network for a terminal to perform synchronization signal block (synchronization signal block, SSB)-based measurement, to avoid high power consumption caused by unnecessary search of the terminal. The terminal needs to perform SSB measurement only in the SMTC window, and does not need to perform SSB measurement outside the window. For inter-frequency measurement in a connected state and measurement in an idle state, the network may configure a maximum of one SMTC window on one frequency for the terminal.

When a terminal measures an SSB of a cell, measurement configuration delivered by a base station to the terminal includes an SMTC period, SMTC duration, and an SMTC offset.

The SMTC period indicates a time interval for the terminal to start SSB measurement. An intra-frequency SMTC period is configured by a parameter NRDuCell. SmtcPeriod, and an inter-frequency SMTC period is configured by a parameter NRCellFreqRelation. SmtcPeriod.

If SSB periods NRDUCell.SsbPeriod of cells on a same frequency are configured differently and an SMTC period corresponding to the frequency is shorter than an SSB period of a part of cells, SSB measurement on these cells may be inaccurate.

The SMTC duration indicates duration in which the terminal performs SSB measurement in each SMTC period. Intra-frequency SMTC duration is configured by a parameter NRDuCell.SmtcDuration, and inter-frequency SMTC duration is configured by a parameter NRCellFreqRelation. SmtcDuration.

The parameter NRDuCell. SmtcDuration and the parameter NRCellFreqRelation. SmtcDuration take effect only for a low frequency. SMTC duration for a high frequency is automatically calculated by the system.

The SMTC offset indicates a time offset for the terminal to start SSB measurement in each SMTC period, and is calculated by the base station to ensure that the terminal can accurately measure an SSB signal.

However, for an asynchronous system PIoT, a tag cannot achieve time synchronization, and therefore, an inter-frequency signal of a neighboring cell may not be detected in the SMTC window.

A solution is to set a short measurement periodicity, for example, 5 ms, to increase a probability of detecting an inter-frequency signal.

However, a short measurement periodicity means that the tag needs to perform neighboring cell measurement more frequently, which brings high overheads to the tag.

In addition, in the SMTC, an SMTC time position is set based on a subframe, which cannot be directly reused for the tag in the asynchronous system.

Therefore, in the cellular network, the cell reselection solution for the tag needs to adapt to a characteristic of the asynchronous system, to resolve a problem that an inter-frequency signal cannot be detected.

In view of this, this application provides a cell reselection solution. A terminal receives measurement indication information from a serving cell, performs neighboring cell measurement based on the measurement indication information, and reselects to a target cell when determining, based on a neighboring cell measurement result, that a reselection criterion is satisfied. The measurement indication information is different from that in an existing cell reselection solution, where the two pieces of information carry different content and are sent in different modes. In the existing cell reselection solution, a synchronization terminal can determine a reception occasion of a neighboring cell signal based on frame number indication information, where the occasion is a time position relative to a frame number, and needs to be frame aligned between the terminal and a base station. However, this is not applicable to an asynchronous tag, because the asynchronous tag cannot implement precise frame number alignment with a cell. Therefore, cell reselection of this type of terminals can be accurately implemented by using the solutions in this application.

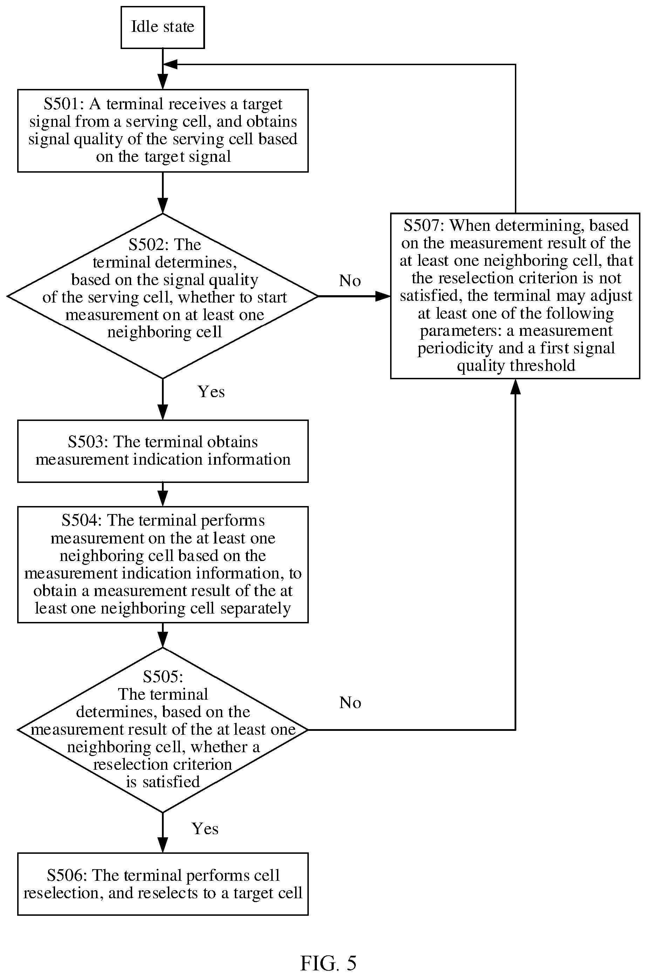

FIG. 5 is a schematic flowchart of a cell reselection method according to an embodiment of this application. For example, the method may include the following steps.

S501: A terminal receives a target signal from a serving cell, and obtains signal quality of the serving cell based on the target signal.

For example, the terminal may be a tag in the foregoing RFID system, or certainly, may be another terminal that has low power consumption and does not support a complex design or complex measurement. This is not limited in this application.

For example, a terminal in an idle state may measure, by using $T=n*T0$ as a periodicity, a signal reception level $Srxlev=Q_{rxlevmeas}$ of the target signal sent by the serving cell, that is, measure RSRP of the serving cell, where n may be fixed or may be adjusted. The target signal may be at least one of the following: a beacon (beacon), a reference signal, a system message (system information, SI), a paging message, a selection (select) message, a synchronization signal (synchronization signal, SS), and downlink data. T0 may be a period of the target signal, or may be a parameter specified in a protocol or broadcast by a base station.

Measuring quality of the target signal is based on, but not limited to, the RSRP, and optionally, based on both the RSRP and RSRQ. In other words, the measurement quality of the target signal of the serving cell may be based only on the RSRP, or the RSRP and/or the RSRQ may be considered.

For example, alternatively, the terminal may receive the target signal (for example, a synchronization signal and PBCH block (synchronization signal and PBCH block, SSB)) from the serving cell based on an indication signal of the base station (for example, a system message (system information, SI) sent by the base station), and obtain the signal quality of the serving cell based on the target signal.

S502: The terminal determines, based on the signal quality of the serving cell, whether to start measurement on at least one neighboring cell.

For example, if the terminal determines that the signal quality of the serving cell is less than or equal to a first signal quality threshold, that is, the signal quality of the serving cell is poor, the terminal determines to start measurement on the at least one neighboring cell, and performs step S503. If the terminal determines that the signal quality of the serving cell is greater than the first signal quality threshold, that is, the signal quality of the serving cell is good, the terminal determines not to start measurement on the at least one neighboring cell, and performs step S507.

For example, the first signal quality threshold may be configured by the base station by using information such as a beacon or SI, specified in a protocol, or preset. It may be understood that the at least one neighboring cell and the serving cell may belong to a same base station, or may belong to different base stations.

For example, the terminal may determine whether Srxlev is less than a sum of the first signal quality threshold $T_{rxlevmin}$ and Thresh. $T_{rxlevmin}$ refers to a minimum reception level of the serving cell, and $T_{rxlevmin}$ may be related to a tag type, for example, passive, semi-passive, or active. For example, transmit power of a passive tag is low, and the threshold may be set to a lower value. Thresh is optional, is for controlling a threshold for starting neighboring cell measurement, and may be dynamically adjusted during cell reselection.

For example, alternatively, the terminal may determine whether Srxlev is less than or equal to a sum of the first signal quality threshold $T_{rxlevmin}$ and Thresh.

S503: When the terminal determines to start measurement on the at least one neighboring cell, the terminal obtains measurement indication information.

For example, the terminal receives the indication signal from the base station, where the indication signal includes the measurement indication information. The measurement indication information indicates the terminal to measure a neighboring cell signal.

The measurement indication information includes at least one of the following information: frequency information of the at least one neighboring cell, a cell identifier of the at least one neighboring cell, a measurement time period, a measurement time offset, and a measurement periodicity.

The measurement indication information may be obtained by the base station through interaction with a base station to which a neighboring cell belongs, may be configured by a core network, or may be configured by using an operation, administration and maintenance (operation administration and maintenance, OAM).

The measurement indication information included in the indication signal may be implemented in the following several manners:

In an implementation, the measurement indication information includes at least one of the following information:

(1) Cell identifier of a neighboring cell

In this embodiment, a to-be-measured neighboring cell may include one or more neighboring cells. The cell identifier of the neighboring cell is for uniquely identifying the neighboring cell.

(2) Frequency information of the neighboring cell

A frequency of a neighboring cell is a frequency on which the neighboring cell is located. If the measurement indication information does not include the frequency information of the neighboring cell, the terminal may consider by default that the neighboring cell and the serving cell are intra-frequency cells.

(3) Measurement time period (Gap_period)

The measurement time period indicates duration for the terminal to perform neighboring cell measurement, or refers to duration for the terminal to monitor a neighboring cell signal. In this specification, measurement may be replaced with monitoring, and measurement may occur within monitoring time, but a neighboring cell signal may not necessarily be received in a whole monitoring time period. For example, the monitoring time may be 10 ms, and a neighboring cell signal is received only at the $5^{th}$ ms. In this case, measurement is performed at the $5^{th}$ ms.

(4) Measurement time offset (Gap_offset): Gap_offset indicates a time offset between receiving the indication signal and starting to perform neighboring cell measurement. If the neighboring cell and the serving cell are inter-frequency cells, an end time position of the measurement time offset is a start time position of frequency switching.

The foregoing Gap_offset is optional, that is, there may alternatively be no Gap_offset. If there is no Gap_offset (or Gap_offset is 0), a time position at which a neighboring cell signal starts to be measured/monitored is a time position at which the reception of the indication signal is completed. In an existing cell reselection solution, a time position at which a neighboring cell signal is measured is a time position relative to a system frame. This does not apply to an asynchronous tag. In addition, Gap_offset may alternatively be greater than 0. To be specific, a time position at which a neighboring cell signal starts to be measured/monitored is after a time position at which reception of the indication signal is completed.

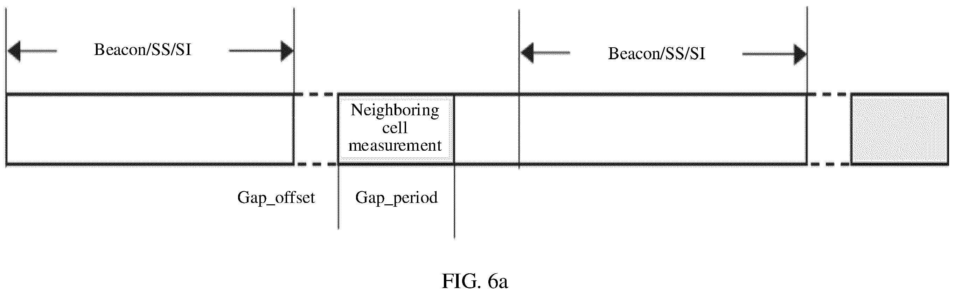

Further, different terminals may correspond to different measurement time offsets and/or different measurement time periods. First, for a plurality of different terminals may be grouped into different terminal groups. For example, the plurality of terminals may be grouped into different terminal groups based on distances between the terminals and the base station, for example, a terminal group 1, a terminal group 2.... Each terminal group includes at least one terminal. Then, different measurement time offsets (Gap_offset) and/or different measurement time periods (Gap_period) are allocated to different terminal groups. Therefore, the base station can perform accurate configuration on the terminals, so that a corresponding terminal can accurately perform neighboring cell measurement. FIG. 6a is a diagram of an example of neighboring cell signal measurement according to an embodiment of this application. The measurement indication information indicates the terminal to measure, after receiving the indication signal, a neighboring cell reference signal starting from a time position after an interval of Gap_offset, where a measurement time period is Gap_period. A measurement periodicity of the neighboring cell signal is consistent with a sending periodicity of the indication signal.

In another implementation, the measurement indication information includes at least one of the following information:

(1) Cell identifier of a neighboring cell

For a meaning of the parameter, refer to the foregoing descriptions.

(2) Frequency information of the neighboring cell

For a meaning of the parameter, refer to the foregoing descriptions.

(3) Measurement periodicity (T_gap)

Different from the foregoing implementation, in this implementation, T_gap is specified as the measurement periodicity, and does not depend on a sending periodicity of the indication signal, so that measurement is more flexible.

(4) Measurement time period (Gap_period)

For a meaning of the parameter, refer to the foregoing descriptions.

(5) Measurement time offset (Gap_offset)

For a meaning of the parameter, refer to the foregoing descriptions.

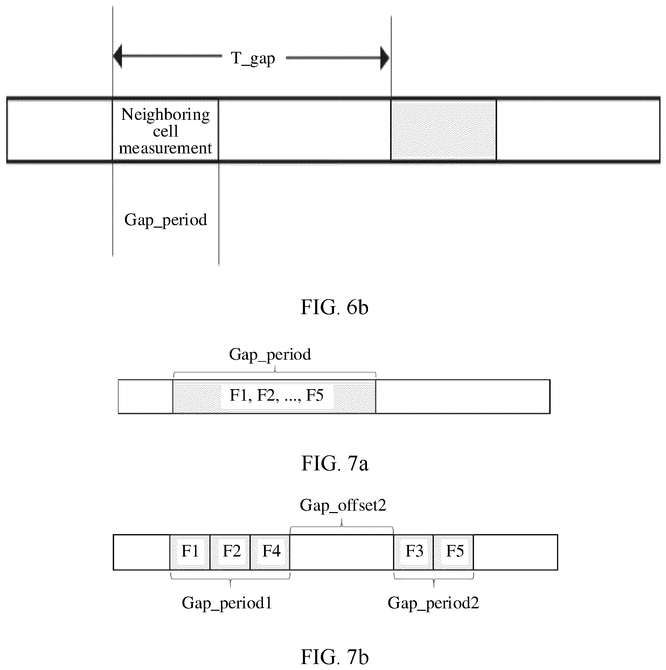

FIG. 6b is another diagram of an example of neighboring cell signal measurement according to an embodiment of this application. The measurement indication information indicates the terminal to measure, after receiving the indication signal, a neighboring cell reference signal starting from a time position after an interval of Gap_offset, where a measurement time period is Gap_period. A measurement periodicity of the neighboring cell signal is T_gap. The measurement indication information is a message of a PIoT network, and is different from that in the existing cell reselection solution, where the two pieces of information carry different content and are sent in different modes. In the existing cell reselection solution, a synchronization terminal can determine a reception occasion of a neighboring cell signal based on frame number indication information, where the occasion is a time position relative to a frame number, and needs to be frame aligned between the terminal and the base station. However, this is not applicable to an asynchronous tag, because the asynchronous tag cannot implement precise frame number alignment with a cell.

Further, for the foregoing obtained frequency information of the at least one neighboring cell, there may be a case in which a plurality of inter-frequency neighboring cells correspond to a plurality of frequencies. However, the tag is asynchronous and does not have frame alignment. Therefore, a time position independent of a frame number needs to be indicated for time of switching each frequency (if the neighboring cell and the serving cell are inter-frequency cells, a frequency F is switched in Gap_period based on Gap_period and Gap_offset (if any), where a time position of switching the frequency is a time position after an interval of Gap_offset after the indication signal is received). The base station may indicate, through configuration, for example, by using a neighboring cell list sequence, a sequence of measuring inter-frequency neighboring cells by the terminal. Alternatively, the base station explicitly indicates a measurement sequence, or the terminal and the base station determine a measurement sequence according to a rule. A correspondence between a frequency and Gap_period can be implemented in the following manners:

In an implementation, neighboring cell reference signals on a plurality of inter-frequencies may be measured in each Gap_period. FIG. 7a is a diagram of signal measurement on frequencies of a plurality of neighboring cells according to an embodiment of this application. In one Gap_period, neighboring cell signals may be measured sequentially on five inter-frequencies F1 to F5. In this implementation, an amount of configuration information of the base station is small, and signaling overheads are reduced. For example, this implementation is applicable to a case in which reference signals sent by different neighboring cells can be controlled within a short time interval (for example, there are a small quantity of neighboring cells, or distances between neighboring cells and the terminal are almost the same).

In another implementation, a plurality of measurement time offsets (Gap_offset) and a plurality of measurement time periods (Gap_period) are configured in one measurement periodicity, and each measurement time period (Gap_period) may correspond to a part of frequencies. FIG. 7b is another diagram of signal measurement on frequencies of a plurality of neighboring cells according to an embodiment of this application. After receiving the indication signal of the serving cell, the terminal performs measurement on F1, F2, and F4 starting from a time position after an interval of Gap_offset1 in a measurement time period 1 (Gap_period1), and performs measurement on F3 and F5 starting from a time position after an interval of Gap_offset2 following Gap_period1 in a measurement time period 2 (Gap_period2). In this implementation, when distances between different neighboring cells and the terminal differ greatly, or there are a large quantity of neighboring cells, it is difficult to control reference signals of different neighboring cells to all arrive in a short time interval. Therefore, a plurality of Gap_periods are set to make configuration of neighboring cell signal measurement more flexible.

To enable the terminal to obtain a neighboring cell signal through searching in specified Gap_period, Gap_period may be obtained through coordination between base stations or configured by the OAM:

The neighboring cell sends the indication signal in specified Gap_period; or

the neighboring cell notifies the serving cell of time when the neighboring cell sends the indication signal.

Optionally, if no neighboring cell is detected in Gap_period:

The terminal may report (for example, a frequency on which a signal cannot be measured) to a network, and obtain a new time position (Gap_offset) and measurement time (Gap_period) information (for example, adjusting Gap_period).

In this way, the terminal may not fail to measure a neighboring cell signal by indicating the neighboring cell measurement sequence on a frequency to the terminal.

S504: The terminal performs measurement on the at least one neighboring cell based on the measurement indication information, to obtain a measurement result of the at least one neighboring cell separately.

Specifically, the terminal measures, based on the measurement indication information, a reference signal sent by the at least one neighboring cell, to obtain the measurement result of the at least one neighboring cell separately.

Specifically, the terminal determines, based on the frequency information of the at least one neighboring cell, whether to perform inter-frequency measurement or intra-frequency measurement on each neighboring cell. If the base station does not configure the frequency information, the neighboring cell and the serving cell are considered to be intra-frequency cells by default.

a. If the neighboring cell and the serving cell are inter-frequency cells: The frequency F is switched in Gap_period based on Gap_period and Gap_offset (if any), the neighboring cell reference signal is monitored, and the signal quality of the neighboring cell is measured.

b. If the neighboring cell and the serving cell are intra-frequency cells: The neighboring cell reference signal is monitored in Gap_period based on Gap_period and Gap_offset (if any) and the signal quality of the neighboring cell is measured.

S505: The terminal determines, based on the measurement result of the at least one neighboring cell, whether a reselection criterion is satisfied.

The cell reselection (cell reselection) criterion is also referred to as an R criterion. An R value is for measuring the R criterion by considering signal quality and various reselection parameters (such as a threshold and a hysteresis value). For example, to determine whether the reselection criterion is satisfied, an R value of each neighboring cell reference signal may be measured first, that is, Rn=Qmeas,n-Qoffset, where $R_n$ is an R value of the neighboring cell (neighbouring cell), in units of dB. Neighboring cells whose Rn is greater than a cell reselection threshold are selected to form a neighboring cell service quality list. $Q_{means,n}$ is a reference signal received power value used for cell reselection, and Qoffset indicates a difference between received signal quality requirements of two cells (the neighboring cell and the serving cell).

Then, the largest Rn is selected from the neighboring cell service quality list.

Then, the selected largest Rn is compared with signal service quality Rs=Qmeas,s+Qhyst of the serving cell. If Rn>Rs is always satisfied within Treselection, cell reselection is performed.

Measuring quality of the neighboring cell reference signal is based on, but not limited to, RSRP, and optionally, based on both the RSRP and RSRQ. In other words, the measurement quality in Rn may be based only on the RSRP, or based on the RSRP and/or the RSRQ. Specifically, this may be configured based on the target signal of the serving cell, or may be specified in a protocol.

If the reselection criterion is satisfied, step S506 is performed; otherwise, step S507 is performed.

S506: When the reselection criterion is satisfied, the terminal performs cell reselection, and reselects to a target cell.

After performing cell reselection, the terminal ends the procedure and waits for next time of measurement.

Optionally, in some implementation scenarios, if the terminal device does not find a neighboring cell that satisfies the reselection criterion, the method may further include the following step:

S507: When the terminal cannot work normally in the serving cell and/or none of the neighboring cells satisfies the cell reselection criterion of the terminal device, the terminal may adjust at least one of the following parameters: the measurement periodicity and the first signal quality threshold. In an implementation, for example, when signal quality of the neighboring cell is much lower than the signal quality of the serving cell, neighboring cell measurement is no longer performed in a specific period of time, and the terminal may adjust a measurement periodicity of the serving cell, so that n=n+D, where D is a (configurable or preset) quantity of periods added each time. In this way, when the signal quality of the serving cell is good, the measurement periodicity of the tag for the serving cell is increased, and unnecessary measurement overheads of the tag are reduced. For example, when step S507 is directly performed after step S502, it indicates that the current service quality Srxlev is good, and a next measurement periodicity may be prolonged, to avoid frequent measurement when the service quality is good.

Alternatively, if the signal quality of the serving cell is excessively low (a minimum service requirement cannot be satisfied, for example, the terminal cannot work normally), the measurement periodicity of the serving cell may be shortened, to quickly find a neighboring cell with good signal quality.

In another implementation, if the signal quality of the neighboring cell is much lower than the signal quality of the serving cell, neighboring cell measurement may no longer be performed within a specific period of time, to reduce unnecessary measurement overheads. Each time a PIoT tag performs measurement, some high overheads are caused. The terminal may add an offset (offset) to the first signal quality threshold, to relax a neighboring cell selection criterion; or end a reselection procedure, and reselect a cell. In this way, a case can be prevented in which a reselection criterion is set to high, but current cell service quality cannot support normal services, and therefore a cell needs to be reselected.

Alternatively, if the signal quality of the serving cell is excessively low (a minimum service requirement cannot be satisfied, for example, the terminal cannot work normally), the first signal quality threshold is reduced, to quickly find a neighboring cell with a good signal, or trigger cell reselection.

According to the cell reselection method provided in this embodiment of this application, the terminal receives the measurement indication information from the serving cell, performs neighboring cell measurement based on the measurement indication information, and reselects to the target cell when determining, based on a neighboring cell measurement result, that the reselection criterion is satisfied. The measurement indication information is different from that in an existing cell reselection solution, where the two pieces of information carry different content and are sent in different modes. In the existing cell reselection solution, a synchronization terminal can determine a reception occasion based on frame number indication information, where the occasion is a time position relative to a frame number, and needs to be frame aligned between the terminal and the base station. However, this is not applicable to an asynchronous tag, because the asynchronous tag cannot implement precise frame number alignment with a cell. Therefore, cell reselection of this type of terminals can be accurately implemented.

Different frequencies correspond to different priorities. During cell reselection, priorities of frequencies may be further considered to accurately determine whether to perform cell reselection. Detailed descriptions are provided below through specific embodiments.

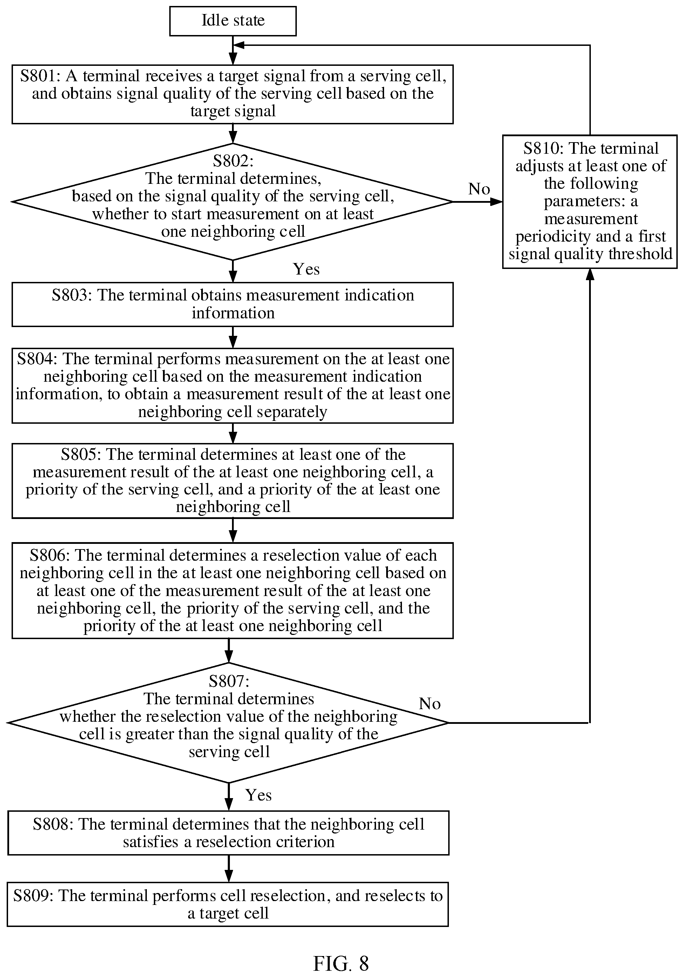

FIG. 8 is another schematic flowchart of a cell reselection method according to an embodiment of this application. For example, the method may include the following steps.

S801: A terminal receives a target signal from a serving cell, and obtains signal quality of the serving cell based on the target signal.

For a specific implementation of this step, refer to step S501 in the embodiment shown in FIG. 5.

S802: The terminal determines, based on the signal quality of the serving cell, whether to start measurement on at least one neighboring cell; and if determining to start measurement on the at least one neighboring cell, performs step S803; otherwise, performs step S810.

For a specific implementation of this step, refer to step S502 in the embodiment shown in FIG. 5.

S803: When the terminal determines to start measurement on the at least one neighboring cell, the terminal obtains measurement indication information.

For a specific implementation of this step, refer to step S503 in the embodiment shown in FIG. 5.

S804: The terminal performs measurement on the at least one neighboring cell based on the measurement indication information, to obtain a measurement result of the at least one neighboring cell separately.

For a specific implementation of this step, refer to step S504 in the embodiment shown in FIG. 5.

S805: The terminal determines at least one of the following: the measurement result of the at least one neighboring cell, a priority of the serving cell, and a priority of the at least one neighboring cell.

Different frequencies may correspond to different priorities. During cell reselection, the terminal may preferentially reselect to a frequency with a high priority. Therefore, the terminal first obtains the priority of the serving cell and the priority of the at least one neighboring cell.

However, in an existing cell reselection solution in NR, a priority of a neighboring cell is analyzed first, and then whether to perform inter-frequency measurement (unconditional inter-frequency measurement for a high-priority neighboring cell) is determined based on RSRP and RSRQ of a serving cell. The inter-frequency measurement for the high-priority neighboring cell may be started when the RSRP of the serving cell is high, which may cause additional measurement overheads to a tag.

In this embodiment, RSRP and/or RSRQ of the serving cell are/is first analyzed (as shown in step S802), and then whether a reselection criterion is satisfied is determined based on a priority parameter and a threshold.

S806: The terminal determines a reselection value of each neighboring cell in the at least one neighboring cell based on at least one of the following: the measurement result of the at least one neighboring cell, the priority of the serving cell, and the priority of the at least one neighboring cell.

In an example, the reselection value of each neighboring cell is a sum of a measurement result of the neighboring cell and a priority parameter Q_priority.

For example, frequency priorities of neighboring cells 1, 2, and 3 are as follows: F1>F2>F3. If measured RSRP of all of the neighboring cells is 10, the terminal preferentially reselects to the neighboring cell 1. A priority parameter Q_priority of a frequency may be considered to be included in R. Higher Q_priority indicates a higher probability of reselection to a neighboring cell. It is assumed that Q_priority corresponding to F1 to F3 is 3, 2, and 1 respectively. R values of the three neighboring cells are obtained as 13, 12, and 11 according to Rn=Qmeas,n+Q_priority. In this case, a neighboring cell with a largest R value can be selected to reselect to a neighboring cell with a highest priority. For example, the priority may be related to a frequency priority, network access control, and/or the like.

In another example, the reselection value of each neighboring cell is a sum of a measurement result of the neighboring cell, a threshold Q, and a priority parameter. The threshold is greater than or equal to 0.

When service quality of a high-priority neighboring cell is calculated, Q may be added based on the measured service quality of the neighboring cell. When service quality of an equal-priority or low-priority neighboring cell is calculated, Q may be subtracted from the measured service quality of the neighboring cell. That is, a probability of reselection to a high-priority neighboring cell is controlled to be higher than that of reselection to a low-priority neighboring cell.

That is, Rn=Qmeas,n+Q+Q_priority, where adjusting the threshold Q may be understood as adjusting a difficulty of selecting to a specific neighboring cell. For example, before adjustment, Q for the neighboring cell is equal to 0, Rn=10+0=10, and Rs for the serving cell is equal to 11. In this case, if a network expects the terminal to preferentially access the neighboring cell due to some reasons, for example, a quantity of terminals accessing the neighboring cell is small, and the service quality of the serving cell is similar to that of the neighboring cell, Q is adjusted to be equal to 2, and Rn=10+2=12, which is greater than Rs. In this way, the reselection criterion is satisfied. In other words, the terminal can reselect to the neighboring cell.

S807: The terminal determines whether the reselection value of the neighboring cell is greater than the signal quality of the serving cell; and if the reselection value of the neighboring cell is greater than the signal quality of the serving cell, performs step S808; otherwise, performs step S810.

S808: When the reselection value of the neighboring cell is greater than the signal quality of the serving cell, the terminal determines that the neighboring cell satisfies the reselection criterion.

For example, an R value of each neighboring cell reference signal Beacon/SS may be measured first, that is, Rn=Qmeas,n-Qoffset+Q+Q_priority.

S809: When the reselection criterion is satisfied, the terminal performs cell reselection, and reselects to a target cell.

For a specific implementation of this step, refer to step S506 in the embodiment shown in FIG. 5.

Further, cell reselection may be performed based on time t1 when the terminal camps on the current serving cell. When t1 satisfies a threshold and Rn>Rs is always satisfied within Treselection, cell reselection is performed, to avoid incorrect/frequent reselection caused by inaccurate measurement.

S810: When the reselection value of the neighboring cell is less than or equal to the signal quality of the serving cell, the terminal determines that the neighboring cell does not satisfy the reselection criterion, and the terminal adjusts at least one of the following parameters: the measurement periodicity and the first signal quality threshold.

For a specific implementation of this step, refer to step S507 in the embodiment shown in FIG. 5.

According to the cell reselection method provided in this embodiment of this application, during cell reselection, a cell with a high frequency priority is preferentially reselected, so that signal quality can be improved.

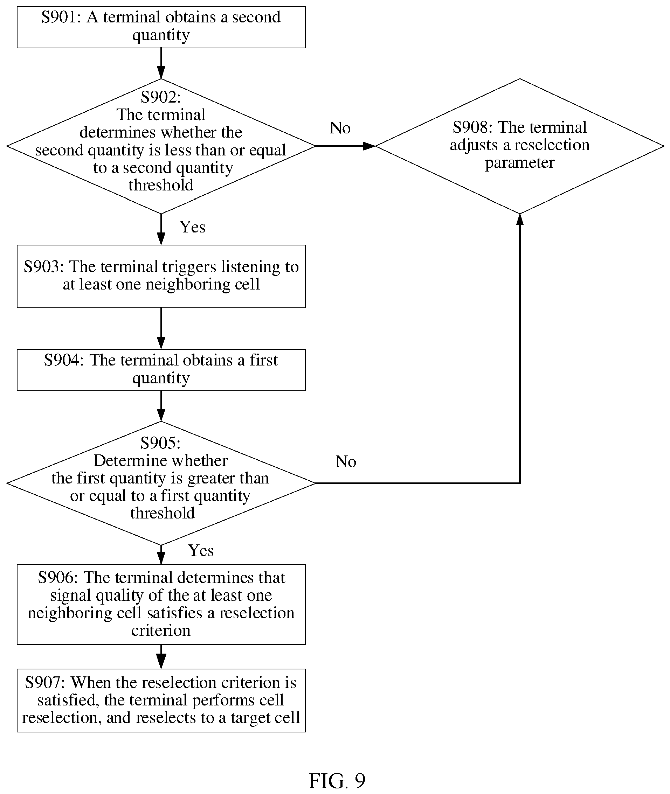

FIG. 9 is still another schematic flowchart of a cell reselection method according to an embodiment of this application. For example, the method may include the following steps.

S901: A terminal obtains a second quantity.

The second quantity is a quantity of target signals that are continuously and successfully received from a serving cell in a second time period.

The target signal includes a beacon, a reference signal, a system message, a paging message, a selection (Select) message, a synchronization signal, downlink data, and the like. This is not specifically limited herein.

For example, after obtaining a target signal from the serving cell through searching, the terminal starts counting, and collects statistics on the second quantity (for example, M) of target signals that are continuously and successfully received from the serving cell in the second time period (for example, T1).

There may be the following several examples for determining, by the terminal, whether continuous reception is performed:

In an example, the terminal may determine, by determining a time interval at which the target signal is received, whether the terminal determines that the target signal is continuously and successfully received. For example, if the interval between successfully receiving the target signals is greater than a time threshold, it is determined that the target signals are discontinuously received; or if the interval between successfully receiving the target signals is less than or equal to the time threshold, it is determined that the target signals are continuously received. The time threshold may be listening time, another preset time parameter, or a cell configuration parameter. This is not specifically limited herein.

In another example, each target signal may carry a sequence number, and the terminal determines, by determining whether sequence numbers of received target signals are continuous, whether the target signals are continuously received. For example, if sequence numbers of received signals are continuous, it is determined that the received signals are continuously received.

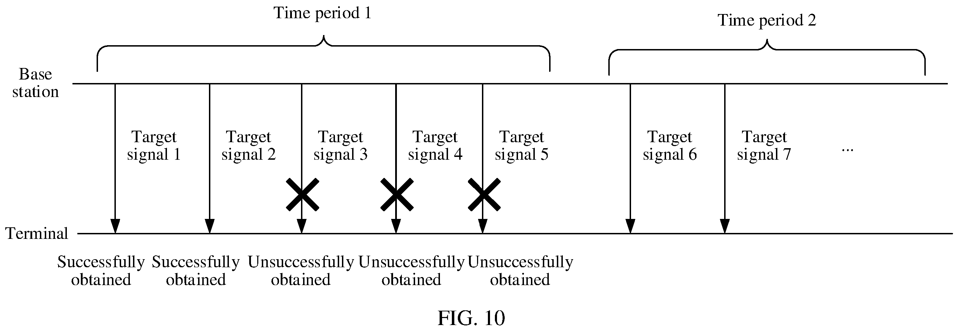

In still another example, FIG. 10 is a diagram of an example of continuous reception according to an embodiment of this application. A base station may send a plurality of target signals to the terminal in one time period, and correspondingly, the terminal may receive the target signals. However, when signal quality of the serving cell is poor, the terminal cannot receive all target signals, and can receive only a part of target signals. For example, in FIG. 10, the base station sends five target signals (a target signal 1 to a target signal 5) to the terminal in a time period 1, but the terminal obtains only two target signals (the target signal 1 and the target signal 2).

Alternatively, the base station may send target signals to the terminal in a plurality of time periods. For example, in FIG. 10, the base station sends five target signals in a time period 1, and also sends target signals in a time period 2. If target signals obtained by the terminal are sent by the base station in a same time period, the target signals obtained by the terminal are continuous. Otherwise, the target signals obtained by the terminal are discontinuous. In other words, when a plurality of target signals obtained by the terminal are in a same time period, it may be considered that the plurality of target signals are continuous. If the plurality of target signals obtained by the terminal are in a plurality of time periods, it may be considered that target signals in different time periods are discontinuous. That is, in FIG. 10, a target signal 6 and a target signal 7 obtained by the terminal in the time period 2 and a target signal 1 and a target signal 2 obtained in the time period 1 are discontinuous, and the target signal 1 and the target signal 2 obtained in the time period 1 are continuous.

The foregoing uses an example in which the base station sends target signals to the terminal in one time period. In addition, the base station may send a target signal in another time unit, for example, send a target signal in one frame or one subframe. This is not specifically limited herein. In this embodiment of this application, alternatively, the terminal may count, by using time at which the target signal is obtained through searching as start time, a quantity of target signals continuously and successfully obtained after the time; or the terminal may periodically trigger, by using j as a periodicity, a procedure of counting a quantity of continuously and successfully obtained target signals, where j may be carried in the target signal, or may be a preset parameter stored in the terminal.

In a possible implementation, the terminal device may alternatively determine only the quantity of target signals that are successfully obtained within the time T, without considering whether the obtained target signals are continuous.

S902: The terminal determines whether the second quantity is less than or equal to a second quantity threshold; and if the second quantity is less than or equal to the second quantity threshold, performs step S903; otherwise, performs step S908.

S903: If the second quantity is less than or equal to the second quantity threshold, the terminal triggers listening to at least one neighboring cell.

If the second quantity M of target cells continuously and successfully received from the serving cell is less than a first threshold (or the second quantity M of target cells continuously and successfully received from the serving cell is less than or equal to the first threshold), listening to a neighboring cell signal is triggered (if a neighboring cell is an inter-frequency cell relative to the serving cell, a time position for switching a frequency and the frequency may be carried in the target signal and/or an indication signal of the serving cell). The indication signal may be at least one of the following: a beacon (beacon), a system message (system information, SI), a paging message, and a selection (select) message.

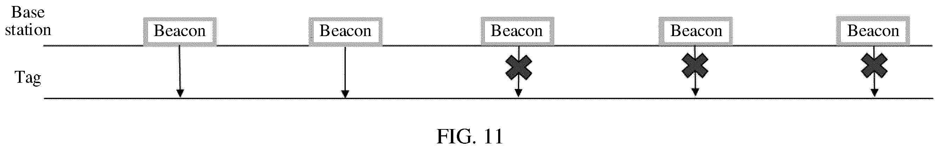

FIG. 11 is a diagram of an example of receiving a beacon by a tag according to an embodiment of this application. If a quantity of beacons of the serving cell that are continuously and successfully received by the tag is 2, which is less than the second quantity threshold (for example, 5), listening to a neighboring cell signal is triggered.

S904: The terminal obtains a first quantity.

The first quantity is a quantity of target signals that are continuously and successfully received from any one of the at least one neighboring cell in a first time period. The target signal may be at least one of the following: beacon, system message, paging message, and synchronization signal.

For a meaning that the terminal continuously and successfully receives the target signals from the neighboring cell, refer to the foregoing descriptions.

S905: The terminal determines whether the first quantity is greater than or equal to a first quantity threshold; and if the first quantity is greater than or equal to the first quantity threshold, performs step S906; otherwise, performs step S908.

S906: If the first quantity is greater than or equal to the first quantity threshold, the terminal determines that signal quality of the at least one neighboring cell satisfies a reselection criterion.

The terminal device determines, depending on whether the quantity of continuously and successfully obtained target signals is greater than the first quantity threshold, whether the target cell satisfies the cell reselection criterion of the terminal device. In addition, alternatively, the terminal device may determine, depending on whether a quantity of successfully obtained target signals is greater than the first quantity threshold, whether the target cell satisfies the cell reselection criterion of the terminal device, without considering whether the plurality of obtained target signals are continuous.

S907: When the reselection criterion is satisfied, the terminal performs cell reselection, and reselects to a target cell.

For each frequency:

(1) The terminal periodically listens to a target signal of a neighboring cell n (where the neighboring cell n is any neighboring cell in the at least one neighboring cell) by using T as a periodicity, and each period of listening time is the first time period (for example, time T1). After receiving the target signal of the neighboring cell n, the terminal starts counting, and a quantity of signals that are continuously and successfully received from the neighboring cell in the first time period (for example, time T1) is N.

If N is always greater than the first quantity threshold within Treselection (Treselection>T), or if N is always greater than M+Offset within Treselection, cell reselection is performed to reselect to the neighboring cell n, where Offset is greater than or equal to 0.

Otherwise, the cell reselection criterion is not satisfied.

(2) After the target signal of the neighboring cell n is received, if neighboring cell signals are not continuously received within T1, neighboring cell measurement is not triggered.

For example, T1 may be carried in the target signal and/or the indication signal of the serving cell.

Further, starting of T1 may be triggered not by using T of the target signal as a periodicity, but by using n*T as a periodicity, where n may be fixed.

The foregoing describes cell reselection based on a quantity of target signals received by the terminal from the serving cell and the neighboring cell. In addition, cell reselection may alternatively be performed based on a block error rate (block error rate, BLER) of other downlink data (for example, a physical broadcast channel (physical broadcast channel, PBCH)/PDSCH/PDCCH).

For example, cell reselection may be performed based on a quantity of in-synchronization (in-sync) times or out-of-synchronization (out-of-sync) times of the detected PBCH/PDSCH/PDCCH:

The terminal determines, based on an in-sync indication and/or an out-of-sync indication received by an upper layer (namely, another protocol layer above a physical layer) from a bottom layer (the physical layer), whether to start receiving a neighboring cell signal and whether a reselection criterion is satisfied. For example, in a process in which the terminal receives a serving cell signal, if the upper layer receives n1 continuous in-sync indications from the bottom layer within time t1, where n1 is less than a second threshold, or the upper layer receives m1 continuous out-of-sync indications from the bottom layer, where m1 is greater than the second threshold, receiving of a neighboring cell signal is triggered.

In a process in which the terminal triggers receiving of a neighboring cell signal, if the upper layer of the terminal receives n2 continuous in-sync indications from the bottom layer within the time t1, where n2 is greater than a third threshold or n2 is greater than n1, the terminal determines that the cell satisfies the cell reselection criterion.

If the upper layer of the terminal continuously receives m2 out-of-sync indications from the bottom layer, where m2 is greater than the third threshold or m2 is greater than m1, the terminal determines that the cell does not satisfy the cell reselection criterion, and may perform cell reselection on another neighboring cell, or end the reselection procedure.

Further, when it is determined that a cell does not satisfy the reselection rule, a timer T is started. If L beacons or L pieces of downlink data are successfully received within time T, it may be considered that the cell may continue to be reselected.

Specific measurement manners of out-of-sync and in-sync are as follows: The physical layer of the tag measures a synchronization signal to obtain a signal to interference plus noise ratio (signal to interference plus noise ratio, SINR), determines a BLER of PDCCH reception under the SINR (based on the protocol TS 38.133, a block error rate BLER of a PDCCH/PDSCH/PBCH under the signal to noise ratio may be determined), and determines whether the synchronization signal is in an out-of-sync state (the BLER is higher than a threshold) and/or an in-sync state (the BLER is lower than the threshold). The in-sync indication may indicate that the target cell and the terminal device may have good communication quality, and the out-of-syn indication may indicate that the target cell and the terminal device are out of synchronization and may have poor communication quality.

Further, based on current camping time t, when t satisfies a threshold and a cell reselection criterion is always satisfied within Treselection, cell reselection may be performed, to avoid incorrect/frequent reselection caused by inaccurate measurement.

Compared with a cell reselection solution in NR, in this embodiment, a signal quality parameter related to the RSRP or the RSRQ does not need to be measured. The tag directly determines, based on the quantity of times of continuously and successfully receiving beacons/synchronization signals or system messages or other downlink data, whether the target cell satisfies the cell reselection criterion. This is simple and convenient to implement, and reduces measurement overheads of the tag.

Optionally, in some implementation scenarios, if the terminal device does not find a neighboring cell that satisfies the reselection criterion, the method may further include the following step:

S908: The terminal adjusts a reselection parameter.

When the terminal cannot work normally in the serving cell and/or none of the neighboring cells satisfies the cell reselection criterion of the terminal device, the reselection parameter may be adjusted. The reselection parameter includes at least one of the following: the first quantity threshold, the second quantity threshold, the first time period, and the second time period.

For example, when the signal quality of the neighboring cell is much lower than the signal quality of the serving cell, the first quantity threshold may be increased, and neighboring cell measurement is no longer performed within specific time; or when the signal quality of the serving cell is excessively low (cannot satisfy a minimum service requirement), the first quantity threshold is decreased, to reduce a threshold for starting measurement, and quickly find a neighboring cell with good signal quality.

For example, when the signal quality of the serving cell is excessively low (cannot satisfy the minimum service requirement), the second quantity threshold may be decreased, to reduce a requirement on the signal quality of the neighboring cell, to select a neighboring cell that can satisfy the minimum service requirement.

For example, when the signal quality of the serving cell is excessively low (cannot satisfy the minimum service requirement), the first time period may be further prolonged, to reduce a threshold for starting measurement, and quickly find a neighboring cell with a good signal.

For example, when the signal quality of the serving cell is excessively low (cannot satisfy the minimum service requirement), the second time period may be prolonged, to reduce a requirement on the signal quality of the neighboring cell, to select a neighboring cell that can satisfy the minimum service requirement.

According to the cell reselection method provided in this embodiment of this application, whether a neighboring cell satisfies the reselection criterion is determined based on a quantity of times of continuously and successfully receiving a target signal of the neighboring cell. This is simple and convenient to implement, and reduces measurement overheads of the terminal.

It may be understood that, to implement the functions in the foregoing embodiments, the first network device and the terminal include corresponding hardware structures and/or software modules for performing each function. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

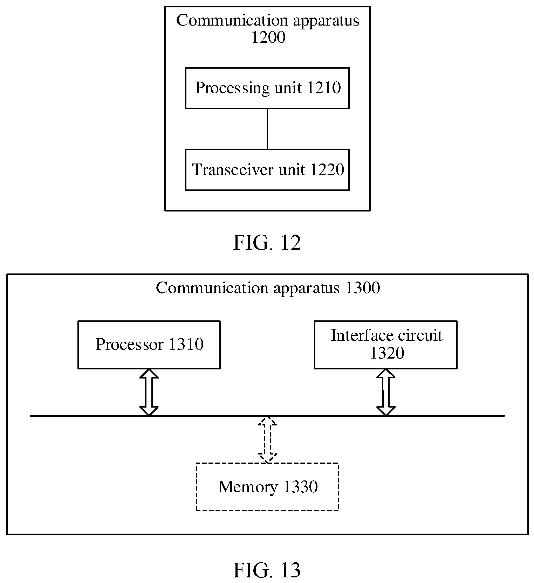

FIG. 12 and FIG. 13 are diagrams of structures of possible communication apparatuses according to embodiments of this application. These communication apparatuses may be configured to implement functions of the terminal or the first network device in the foregoing method embodiments, and therefore can also implement beneficial effects of the foregoing method embodiments. In embodiments of this application, the communication apparatus may be one of the terminals 130a to 130j shown in FIG. 1, may be the network device 120a or 120b shown in FIG. 1, or may be a module (for example, a chip) used in the terminal or the first network device.

As shown in FIG. 12, a communication apparatus 1200 includes a processing unit 1210 and a transceiver unit 1220. The communication apparatus 1200 is configured to implement functions of the terminal or the first network device in the method embodiment shown in FIG. 5, FIG. 8, or FIG. 9.

When the communication apparatus 1200 is configured to implement functions of the terminal in the method embodiment shown in FIG. 5 or FIG. 8, the processing unit 1210 is configured to perform operations of the terminal in steps S501 to S507 in the embodiment shown in FIG. 5, and the transceiver unit 1220 is configured to perform operations of interacting with the serving cell and the neighboring cell in steps S501 and S504 in the embodiment shown in FIG. 5.

When the communication apparatus 1200 is configured to implement functions of the first network device in the method embodiment shown in FIG. 5 or FIG. 8, the transceiver unit 1220 is configured to perform an operation of interaction between the first network device and the serving cell in step S501 in the embodiment shown in FIG. 5.

When the communication apparatus 1200 is configured to implement functions of the terminal in the method embodiment shown in FIG. 9, the processing unit 1210 is configured to perform steps S901 to S908 in the embodiment shown in FIG. 9.

For more detailed descriptions of the processing unit 1210 and the transceiver unit 1220, directly refer to related descriptions in the method embodiment shown in FIG. 5, FIG. 8, or FIG. 9. Details are not described herein again.

As shown in FIG. 13, a communication apparatus 1300 includes a processor 1310 and an interface circuit 1320. The processor 1310 and the interface circuit 1320 are coupled to each other. It may be understood that the interface circuit 1320 may be a transceiver or an input/output interface. Optionally, the communication apparatus 1300 may further include a memory 1330, configured to store instructions executed by the processor 1310, store input data required by the processor 1310 to run the instructions, or store data generated after the processor 1310 runs the instructions.

When the communication apparatus 1300 is configured to implement the method shown in FIG. 5, FIG. 8, or FIG. 9, the processor 1310 is configured to implement functions of the processing unit 1210, and the interface circuit 1320 is configured to implement functions of the transceiver unit 1220.

When the communication apparatus is a chip used in a terminal, the chip in the terminal implements a function of the terminal in the foregoing method embodiments. The chip of the terminal receives information from another module (for example, a radio frequency module or an antenna) in the terminal, where the information is sent by a first network device or a second network device to the terminal; or the chip of the terminal device sends information to another module (for example, a radio frequency module or an antenna) in the terminal, where the information is sent by the terminal to a first network device or a second network device.

When the communication apparatus is a chip used in a first network device, the chip of the first network device implements a function of the first network device in the foregoing method embodiment. The chip of the first network device receives information from a terminal or another module (for example, a radio frequency module or an antenna) in a second network device, and the information is sent by the terminal or the second network device to the first network device. Alternatively, the chip of the first network device sends information to a terminal or another module (for example, a radio frequency module or an antenna) in the second network device, and the information is sent by the first network device to the terminal or the second network device.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

In this application, "at least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists. A and B may be singular or plural. In the text descriptions of this application, the character "/" represents an "or" relationship between the associated objects. In a formula in this application, the character "/" represents a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

**Claims**

1. A cell reselection method, wherein the method comprises:

   receiving, by a terminal, an indication signal from a serving cell, wherein the indication signal comprises measurement indication information, and the measurement indication information comprises at least one of the following information: frequency information of at least one neighboring cell, a cell identifier of the at least one neighboring cell, a measurement time period, a measurement time offset, and a measurement periodicity, wherein the measurement time period indicates duration of measurement or monitoring on the at least one neighboring cell in the measurement periodicity, the measurement time offset indicates a time offset between receiving the target signal and starting neighboring cell measurement, and the measurement time offset is greater than or equal to 0;
   performing, by the terminal, measurement on the at least one neighboring cell based on the measurement indication information, to obtain a measurement result of the at least one neighboring cell separately; and
   reselecting, by the terminal, to a target cell when determining, based on the measurement result of the at least one neighboring cell, that a reselection criterion is satisfied, wherein the target cell is one of the at least one neighboring cell.

2. The method according to claim 1, wherein the indication signal is at least one of the following: a beacon, a system message, a paging message, a selection message, and a synchronization signal.

3. The method according to claim 1 or 2, wherein the method further comprises:

   obtaining, by the terminal, signal quality of the serving cell based on a target signal of the serving cell, wherein the target signal is at least one of the following: a beacon, a reference signal, a system message, a paging message, a selection message, a synchronization signal, and downlink data; and
   determining, by the terminal based on the signal quality of the serving cell, whether to start measurement on the at least one neighboring cell.

4. The method according to claim 3, wherein determining, by the terminal based on the signal quality of the serving cell, whether to start measurement on the at least one neighboring cell comprises:
   if determining that the signal quality of the serving cell is less than or equal to a first signal quality threshold, determining, by the terminal, to start measurement on the at least one neighboring cell, wherein the at least one neighboring cell comprises at least one type of the following cells: an intra-frequency cell of the serving cell or an inter-frequency cell of the serving cell.

5. The method according to any one of claims 1 to 4, wherein the terminal belongs to a first terminal group, the first terminal group comprises at least one terminal, and the first terminal group corresponds to a first measurement time period, and/or the first terminal group corresponds to a first measurement time offset.

6. The method according to any one of claims 1 to 5, wherein the at least one neighboring cell and the serving cell are intra-frequency cells, and the measurement indication information further comprises a measurement sequence of the at least one neighboring cell; and
   performing, by the terminal, measurement on the at least one neighboring cell based on the measurement indication information to obtain the measurement result of the at least one neighboring cell separately comprises:
   performing, in the measurement time period, measurement on the at least one neighboring cell in sequence based on the measurement sequence of the at least one neighboring cell, to obtain the measurement result of the at least one neighboring cell separately.

7. The method according to any one of claims 1 to 5, wherein the at least one neighboring cell and the serving cell are inter-frequency cells, the at least one neighboring cell corresponds to at least one inter-frequency, the measurement indication information further comprises a measurement sequence of the at least one neighboring cell, and the at least one neighboring cell corresponds to at least one measurement time period; and
   performing, by the terminal, measurement on the at least one neighboring cell based on the measurement indication information to obtain the measurement result of the at least one neighboring cell separately comprises:

   handing over, by the terminal, to a frequency corresponding to the at least one neighboring cell in the at least one measurement time period; and

performing, by the terminal on the frequency corresponding to the at least one neighboring cell, measurement on the at least one neighboring cell in sequence based on the measurement sequence of the at least one neighboring cell, to obtain the measurement result of the at least one neighboring cell separately.

8. The method according to any one of claims 4 to 7, wherein the method further comprises:
when determining, based on the measurement result of the at least one neighboring cell, that the reselection criterion is not satisfied, adjusting, by the terminal, at least one of the following parameters: the measurement periodicity and the first signal quality threshold.

9. The method according to any one of claims 1 to 8, wherein the method further comprises:

determining, by the terminal, at least one of the following: the measurement result of the at least one neighboring cell, a priority of the serving cell, and a priority of the at least one neighboring cell;
determining, by the terminal, a reselection value of each neighboring cell in the at least one neighboring cell based on at least one of the following: the measurement result of the at least one neighboring cell, the priority of the serving cell, and the priority of the at least one neighboring cell, wherein the reselection value of each neighboring cell is a sum of a measurement result of the neighboring cell and a threshold and/or a priority parameter, and the threshold is greater than or equal to 0; and
when the reselection value of the neighboring cell is greater than the signal quality of the serving cell, determining, by the terminal, that the neighboring cell satisfies the reselection criterion; or
when the reselection value of the neighboring cell is less than or equal to the signal quality of the serving cell, determining, by the terminal, that the neighboring cell does not satisfy the reselection criterion.

10. A cell reselection method, wherein the method comprises:

obtaining, by a first network device, measurement indication information, wherein the measurement indication information comprises at least one of the following information: frequency information of at least one neighboring cell, a cell identifier of the at least one neighboring cell, a measurement time period, a measurement time offset, and a measurement periodicity, wherein the measurement time period indicates duration of measurement or monitoring on the at least one neighboring cell in the measurement periodicity, the measurement time offset indicates a time offset between receiving the target signal and starting neighboring cell measurement, and the measurement time offset is greater than or equal to 0; and
sending, by the first network device, an indication signal, wherein the indication signal comprises the measurement indication information.

11. The method according to claim 10, wherein the indication signal further comprises at least one of the following signals: a beacon, a system message, a paging message, a selection message, and a synchronization signal.

12. The method according to claim 10 or 11, wherein obtaining, by the first network device, the measurement indication information comprises at least one of the following:

obtaining, by the first network device, the measurement indication information configured by an operation, administration and maintenance OAM; or
receiving, by the first network device, the measurement indication information from a second network device serving a neighboring cell.

13. A cell reselection apparatus, wherein the apparatus comprises a transceiver unit and a processing unit, wherein

the transceiver unit is configured to receive a target signal from a serving cell, wherein the indication signal comprises measurement indication information, and the measurement indication information comprises at least one of the following information: frequency information of at least one neighboring cell, a cell identifier of the at least one neighboring cell, a measurement time period, a measurement time offset, and a measurement periodicity, wherein the measurement time period indicates duration of measurement or monitoring on the at least one neighboring cell in the measurement periodicity, the measurement time offset indicates a time offset between receiving the target signal and starting neighboring cell measurement, and the measurement time offset is greater than or equal to 0;
the processing unit is configured to perform measurement on the at least one neighboring cell based on the measurement indication information, to obtain a measurement result of the at least one neighboring cell separately; and

the processing unit is further configured to reselect to a target cell when determining, based on the measurement result of the at least one neighboring cell, that a reselection criterion is satisfied, wherein the target cell is one of the at least one neighboring cell.

14. The apparatus according to claim 13, wherein the indication signal is at least one of the following: a beacon, a system message, a paging message, a selection message, and a synchronization signal.

15. The apparatus according to claim 13 or 14, wherein

the processing unit is further configured to obtain signal quality of the serving cell based on a target signal of the serving cell, wherein the target signal is at least one of the following: a beacon, a reference signal, a system message, a paging message, a selection message, a synchronization signal, and downlink data; and
the processing unit is further configured to determine, based on the signal quality of the serving cell, whether to start measurement on the at least one neighboring cell.

16. The apparatus according to claim 15, wherein the processing unit is further configured to: if determining that the signal quality of the serving cell is less than or equal to a first signal quality threshold, determine to start measurement on the at least one neighboring cell, wherein the at least one neighboring cell comprises at least one type of the following cells: an intra-frequency cell of the serving cell or an inter-frequency cell of the serving cell.

17. The apparatus according to any one of claims 13 to 16, wherein the terminal belongs to a first terminal group, the first terminal group comprises at least one terminal, and the first terminal group corresponds to a first measurement time period, and/or the first terminal group corresponds to a first measurement time offset.

18. The apparatus according to any one of claims 13 to 17, wherein the at least one neighboring cell and the serving cell are intra-frequency cells, and the measurement indication information further comprises a measurement sequence of the at least one neighboring cell; and
the processing unit is further configured to perform, in the measurement time period, measurement on the at least one neighboring cell in sequence based on the measurement sequence of the at least one neighboring cell, to obtain the measurement result of the at least one neighboring cell separately.

19. The apparatus according to any one of claims 13 to 17, wherein the at least one neighboring cell and the serving cell are inter-frequency cells, the at least one neighboring cell corresponds to at least one inter-frequency, the measurement indication information further comprises a measurement sequence of the at least one neighboring cell, and the at least one neighboring cell corresponds to at least one measurement time period; and
performing, by the terminal, measurement on the at least one neighboring cell based on the measurement indication information to obtain the measurement result of the at least one neighboring cell separately comprises:

handing over, by the terminal, to a frequency corresponding to the at least one neighboring cell in the at least one measurement time period; and
performing, by the terminal on the frequency corresponding to the at least one neighboring cell, measurement on the at least one neighboring cell in sequence based on the measurement sequence of the at least one neighboring cell, to obtain the measurement result of the at least one neighboring cell separately.

20. The apparatus according to any one of claims 16 to 19, wherein the processing unit is further configured to: when determining, based on the measurement result of the at least one neighboring cell, that the reselection criterion is not satisfied, adjust at least one of the following parameters: the measurement periodicity and the first signal quality threshold.

21. The apparatus according to any one of claims 13 to 20, wherein

the processing unit is further configured to determine at least one of the following: the measurement result of the at least one neighboring cell, a priority of the serving cell, and a priority of the at least one neighboring cell;
the processing unit is further configured to determine a reselection value of each neighboring cell in the at least one neighboring cell, wherein the reselection value of each neighboring cell is a sum of a measurement result of the neighboring cell and a threshold and/or a priority parameter, and the threshold is greater than or equal to 0; and
the processing unit is further configured to: when the reselection value of the neighboring cell is greater than the signal quality of the serving cell, determine that the neighboring cell satisfies the reselection criterion; or the processing unit is further configured to: when the reselection value of the neighboring cell is less than or equal to the signal quality of the serving cell, determine that the neighboring cell does not satisfy the reselection criterion.

22. A cell reselection apparatus, wherein the apparatus comprises a processing unit and a transceiver unit, wherein

the processing unit is configured to obtain measurement indication information, wherein the measurement indication information comprises at least one of the following information: frequency information of at least one neighboring cell, a cell identifier of the at least one neighboring cell, a measurement time period, a measurement time offset, and a measurement periodicity, wherein the measurement time period indicates duration of measurement or monitoring on the at least one neighboring cell in the measurement periodicity, the measurement time offset indicates a time offset between receiving the target signal and starting neighboring cell measurement, and the measurement time offset is greater than or equal to 0; and
the transceiver unit is configured to send a target signal, wherein the indication signal comprises the measurement indication information.

23. The apparatus according to claim 22, wherein the indication signal further comprises at least one of the following signals: a beacon, a system message, a paging message, a selection message, and a synchronization signal.

24. The apparatus according to claim 22 or 23, wherein

the processing unit is configured to obtain the measurement indication information configured by an operation, administration and maintenance OAM; or
the transceiver unit is configured to receive the measurement indication information from a second network device serving a neighboring cell.

25. A communication system, comprising the communication apparatus according to any one of claims 13 to 21 and the communication apparatus according to any one of claims 22 to 24.

26. A communication apparatus, comprising a processor and an interface circuit, wherein the interface circuit is configured to: receive a signal from another communication apparatus other than the communication apparatus and transmit the signal to the processor, or send a signal from the processor to another communication apparatus other than the communication apparatus; and the processor is configured to implement the method according to any one of claims 1 to 12 by using a logic circuit or by executing code instructions.

27. A chip, wherein the chip is configured to perform the method according to any one of claims 1 to 12.

28. A chip module, comprising a transceiver component and a chip, wherein the chip is configured to perform the method according to any one of claims 1 to 12.

29. A computer-readable storage medium, wherein the storage medium stores a computer program or instructions; and when the computer program or the instructions are executed by a communication apparatus, the method according to any one of claims 1 to 12 is implemented.

FIG. 1

FIG. 2a

**2-IAB**

Uu

100 m level

Uu-PIoT

IAB node
(PIoT)

Tag

Macro BS

FIG. 2b

**3-Sidelink**

10 m level

Sidelink-PIoT

UE

Tag

FIG. 2c

FIG. 3a

FIG. 3b

FIG. 3c

FIG. 3d

FIG. 4

Idle state

S501: A terminal receives a target signal from a serving cell, and obtains signal quality of the serving cell based on the target signal

S502: The terminal determines, based on the signal quality of the serving cell, whether to start measurement on at least one neighboring cell

No

S507: When determining, based on the measurement result of the at least one neighboring cell, that the reselection criterion is not satisfied, the terminal may adjust at least one of the following parameters: a measurement periodicity and a first signal quality threshold

Yes

S503: The terminal obtains measurement indication information

S504: The terminal performs measurement on the at least one neighboring cell based on the measurement indication information, to obtain a measurement result of the at least one neighboring cell separately

S505: The terminal determines, based on the measurement result of the at least one neighboring cell, whether a reselection criterion is satisfied

No

Yes

S506: The terminal performs cell reselection, and reselects to a target cell

FIG. 5

FIG. 6a

FIG. 6b

FIG. 7a

FIG. 7b

Idle state

S801: A terminal receives a target signal from a serving cell, and obtains signal quality of the serving cell based on the target signal

S802:
The terminal determines, based on the signal quality of the serving cell, whether to start measurement on at least one neighboring cell

No

S810: The terminal adjusts at least one of the following parameters: a measurement periodicity and a first signal quality threshold

Yes

S803: The terminal obtains measurement indication information

S804: The terminal performs measurement on the at least one neighboring cell based on the measurement indication information, to obtain a measurement result of the at least one neighboring cell separately

S805: The terminal determines at least one of the measurement result of the at least one neighboring cell, a priority of the serving cell, and a priority of the at least one neighboring cell

S806: The terminal determines a reselection value of each neighboring cell in the at least one neighboring cell based on at least one of the measurement result of the at least one neighboring cell, the priority of the serving cell, and the priority of the at least one neighboring cell

S807:
The terminal determines whether the reselection value of the neighboring cell is greater than the signal quality of the serving cell

No

Yes

S808: The terminal determines that the neighboring cell satisfies a reselection criterion

S809: The terminal performs cell reselection, and reselects to a target cell

FIG. 8

S901: A terminal obtains a second quantity

S902: The terminal determines whether the second quantity is less than or equal to a second quantity threshold

No ──→ S908: The terminal adjusts a reselection parameter

Yes

S903: The terminal triggers listening to at least one neighboring cell

S904: The terminal obtains a first quantity

S905: Determine whether the first quantity is greater than or equal to a first quantity threshold

No ──→

Yes

S906: The terminal determines that signal quality of the at least one neighboring cell satisfies a reselection criterion

S907: When the reselection criterion is satisfied, the terminal performs cell reselection, and reselects to a target cell

FIG. 9

FIG. 10

EP 4 626 078 A1

Base
station

| Beacon | | Beacon | | Beacon | | Beacon | | Beacon |

Tag

FIG. 11

Communication apparatus
1200

Processing unit 1210

Transceiver unit 1220

FIG. 12

Communication apparatus 1300

Processor 1310

Interface circuit
1320

Memory 1330

FIG. 13

## INTERNATIONAL SEARCH REPORT

| International application No. |
| --- |
| **PCT/CN2023/135147** |

| A. | CLASSIFICATION OF SUBJECT MATTER |
| --- | --- |

H04W 36/08(2009.01)i

According to International Patent Classification (IPC) or to both national classification and IPC

| B. | FIELDS SEARCHED |
| --- | --- |

Minimum documentation searched (classification system followed by classification symbols)

IPC: H04W; H04Q

Documentation searched other than minimum documentation to the extent that such documents are included in the fields searched

Electronic data base consulted during the international search (name of data base and, where practicable, search terms used)

CNKI; CNTXT; ENTXT; ENTXTC; DWPI; 3GPP: 低功耗, IoT, 物联网, RFID, 标签, 功率, 测量, 配置, 指示, 周期, 时间段, 时段, 标识, 邻区, 小区, 重选, 偏移, 频点, 结果, 上报, low, power, measur+, configur+, indicat+, period, time, identif+, adjacent, neighbour, cell, reselect, offset, frequency, result, report

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2020145787 A1 (LG ELECTRONICS INC.) 16 July 2020 (2020-07-16) description, paragraphs 5-330 | 1-29 |
| X | US 2022312284 A1 (QUALCOMM INC.) 29 September 2022 (2022-09-29) description, paragraphs 4-127 | 1-29 |
| X | CN 113543240 A (HUAWEI TECHNOLOGIES CO., LTD.) 22 October 2021 (2021-10-22) description, paragraphs 7-126 | 1-29 |
| A | CN 113810964 A (HUAWEI TECHNOLOGIES CO., LTD.) 17 December 2021 (2021-12-17) entire document | 1-29 |
| A | WO 2022022591 A1 (HUAWEI TECHNOLOGIES CO., LTD.) 03 February 2022 (2022-02-03) entire document | 1-29 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **24 January 2024** | **01 February 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/135147**

| Patent document cited in search report | | | Publication date (day/month/year) | Patent family member(s) | | | Publication date (day/month/year) |
|---|---|---|---|---|---|---|---|
| WO | 2020145787 | A1 | 16 July 2020 | None | | | |
| US | 2022312284 | A1 | 29 September 2022 | None | | | |
| CN | 113543240 | A | 22 October 2021 | WO | 2021208631 | A1 | 21 October 2021 |
| CN | 113810964 | A | 17 December 2021 | WO | 2021249244 | A1 | 16 December 2021 |
| WO | 2022022591 | A1 | 03 February 2022 | CN | 114071722 | A | 18 February 2022 |

Form PCT/ISA/210 (patent family annex) (July 2022)

**REFERENCES CITED IN THE DESCRIPTION**

**Patent documents cited in the description**

- CN 202211560779